# EUROPEAN PATENT SPECIFICATION

(11) **EP 3 909 310 B1**
(45) Date of publication and mention of the grant of the patent: **23.04.2025**
(21) Application number: 20703112.1
(22) Date of filing: 06.01.2020
(51) Int. Cl.: H04W 52/08, H04W 52/48

(54) **METHODS AND APPARATUS TO APPLY DIFFERENT POWER CONTROL COMMANDS FOR PARTICULAR TRANSMISSIONS ON A SAME CHANNEL**
VERFAHREN UND VORRICHTUNG ZUM ANWENDEN VERSCHIEDENER LEISTUNGSSTEUERUNGSBEFEHLE FÜR BESTIMMTE ÜBERTRAGUNGEN AUF DEMSELBEN KANAL
PROCÉDÉS ET APPAREIL POUR APPLIQUER DIFFÉRENTES INSTRUCTIONS DE COMMANDE DE PUISSANCE POUR DES TRANSMISSIONS PARTICULIÈRES SUR UN MÊME CANAL

(30) Priority: 09.01.2019 US 201962790408 P; 03.01.2020 US 202016734210
(43) Date of publication of application: 17.11.2021
(73) Proprietor: QUALCOMM Incorporated, San Diego, CA 92121-1714 (US)
(72) Inventor: DAMNJANOVIC, Aleksandar, San Diego, California 92121-1714 (US); ZHANG, Xiaoxia, San Diego, California 92121-1714 (US); SUN, Jing, San Diego, California 92121-1714 (US); FAKOORIAN, Seyed Ali Akbar, San Diego, California 92121-1714 (US)
(74) Representative: Bardehle Pagenberg Partnerschaft mbB Patentanwälte Rechtsanwälte
(86) International application number: PCT/US2020/012383
(87) International publication number: WO 2020/146266

(56) References cited:
- WO-A1-2018/084996
- NOKIA SIEMENS NETWORKS: "Summary of Power Control E-mail Discussion", 3GPP DRAFT; R1-080330_UL_PC_SUMMARY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Sevilla, Spain; 20080114 - 20080118, 19 January 2008 (2008-01-19), XP050596618
- ALCATEL-LUCENT: "Clarification on Uplink Power Control to support UL ICIC", 3GPP DRAFT; R1-074987_REF_CLARIF_PWR_CONTR_ULICIC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Korea; 20071030, 30 October 2007 (2007-10-30), XP050108438
- MOTOROLA: "Remaining Issues on UL PC", 3GPP DRAFT; R1-080097, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Sevilla, Spain; 20080108, 8 January 2008 (2008-01-08), XP050108632

## Description

### BACKGROUND

### Technical Field

The present disclosure relates generally to communication systems, and more particularly, to wireless communication involving transmission power control.

### Introduction

Wireless communication systems are widely deployed to provide various telecommunication services such as telephony, video, data, messaging, and broadcasts. Typical wireless communication systems may employ multiple-access technologies capable of supporting communication with multiple users by sharing available system resources. Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, and time division synchronous code division multiple access (TD-SCDMA) systems.

These multiple access technologies have been adopted in various telecommunication standards to provide a common protocol that enables different wireless devices to communicate on a municipal, national, regional, and even global level. An example telecommunication standard is 5G New Radio (NR). 5G/NR is part of a continuous mobile broadband evolution promulgated by Third Generation Partnership Project (3GPP) to meet new requirements associated with latency, reliability, security, scalability (e.g., with Internet of Things (IoT)), and other requirements. 5G/NR includes services associated with enhanced mobile broadband (eMBB), massive machine type communications (mMTC), and ultra reliable low latency communications (URLLC). Some aspects of 5G/NR may be based on the 4G Long Term Evolution (LTE) standard. There exists a need for further improvements in 5G/NR technology. These improvements may also be applicable to other multi-access technologies and the telecommunication standards that employ these technologies.

WO 2018/084996 A1 relates to controlling transmit power in wireless communications. It can be determined, at a user equipment (UE), that communications with a base station are configured over a connection associated with a threshold reliability. Based at least in part on this determination, a con-figured transmit power can be adjusted to an adjusted transmit power for a transmission attempt over the connection. Data can then be transmitted at the adjusted transmit power.

3GPP contribution "Summary of Power Control E-mail discussion" by Nokia Siemens Networks, R1-080330, summarizes the discussion on uplink power control.

3GPP contribution "Clarification on Uplink Power Control to support UL ICIC" by Alcatel-Lucent, R1-07-4987, discusses the issue of how to interpret the power control rule for synchronous non-adaptive retransmissions.

3GPP contribution "Remaining Issues on UL PC" by Motorola, R1-080097, discusses further aspects of uplink power control.

### SUMMARY

The invention is defined by the independent claims. Preferred embodiments of the invention are stipulated in the dependent claims. While several embodiments and/or examples have been disclosed in the description, the subject matter for which protection is sought is limited to those examples and/or embodiments which are encompassed by the scope of the appended claims. Embodiments and/or examples that do not fall under the scope of the claims are useful for understanding the invention. The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

Different transmissions on a same channel may have different reliability requirements. The present disclosure uniquely provides techniques for applying different power control adjustments for particular transmissions on a same channel.

In an aspect of the disclosure, a method, a computer-readable medium, and an apparatus are provided for facilitating wireless communication at a UE. An example apparatus is configured to determine a first transmission power for a first transmission using a first transmission power control parameter. The example apparatus is also configured to transmit the first transmission using the first transmission power. Additionally, the example apparatus is configured to determine a second transmission power for a re-transmission using a second transmission power control parameter. Further, the example apparatus is configured to transmit the re-transmission using the second transmission power.

In another aspect of the disclosure, a method, a computer-readable medium, and an apparatus are provided for facilitating wireless communication at a base station. An example apparatus is configured to transmit a first power control command to a User Equipment (UE) for determining a first transmission power for a first transmission. The example apparatus is also configured to transmit a second power control command to the UE for determining a second transmission power for a re-transmission. Further, the example apparatus is configured to indicate a power offset to the UE for use in determining the second transmission power for the re-transmission.

To the accomplishment of the foregoing and related ends, the one or more aspects comprise the features hereinafter fully described and particularly pointed out in the claims. The following description and the annexed drawings set forth in detail some illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

FIG. 1 is a diagram illustrating an example of a wireless communications system and an access network.
FIGS. 2A, 2B, 2C, and 2D are diagrams illustrating examples of a first 5G/NR frame, DL channels within a 5G/NR subframe, a second 5G/NR frame, and UL channels within a 5G/NR subframe, respectively.
FIG. 3 is a diagram illustrating an example of a base station and user equipment (UE) in an access network.
FIG. 4 is a flow diagram illustrating an example of applying different power control commands for particular transmissions on a same channel, as disclosed herein.
FIG. 5 is a flow diagram illustrating another example of applying different power control commands for particular transmissions on a same channel, as disclosed herein.
FIG. 6 is a diagram illustrating a call flow diagram between a base station and a UE when the UE employs applying different power control commands for particular transmissions on a same channel.
FIG. 7 is a flowchart of a method of wireless communication for a device to apply different power control commands for particular transmissions on a same channel.
FIG. 8 is a conceptual data flow diagram illustrating the data flow between different means/components in an example apparatus.
FIG. 9 is a diagram illustrating an example hardware implementation for an apparatus employing a processing system.
FIG. 10 is a flowchart of a method of wireless communication for a device to facilitate applying different power control commands for particular transmissions on a same channel.
FIG. 11 is a conceptual data flow diagram illustrating the data flow between different means/components in an example apparatus.
FIG. 12 is a diagram illustrating an example hardware implementation for an apparatus employing a processing system.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

Several aspects of telecommunication systems will now be presented with reference to various apparatus and methods. These apparatus and methods will be described in the following detailed description and illustrated in the accompanying drawings by various blocks, components, circuits, processes, algorithms, etc. (collectively referred to as "elements"). These elements may be implemented using electronic hardware, computer software, or any combination thereof. Whether such elements are implemented as hardware or software depends upon the particular application and design constraints imposed on the overall system.

By way of example, an element, or any portion of an element, or any combination of elements may be implemented as a "processing system" that includes one or more processors. Examples of processors include microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software components, applications, software applications, software packages, routines, subroutines, objects, executables, threads of execution, procedures, functions, etc., whether referred to as software, firmware, middleware, microcode, hardware description language, or otherwise.

Accordingly, in one or more example embodiments, the functions described may be implemented in hardware, software, or any combination thereof. If implemented in software, the functions may be stored on or encoded as one or more instructions or code on a computer-readable medium. Computer-readable media includes computer storage media. Storage media may be any available media that can be accessed by a computer. By way of example, and not limitation, such computer-readable media can comprise a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that can be used to store computer executable code in the form of instructions or data structures that can be accessed by a computer.

As used herein, the term computer-readable medium is expressly defined to include any type of computer readable storage device and/or storage disk and to exclude propagating signals and to exclude transmission media. As used herein, "computer-readable medium," "machine-readable medium," "computer-readable memory," and "machine-readable memory" are used interchangeably.

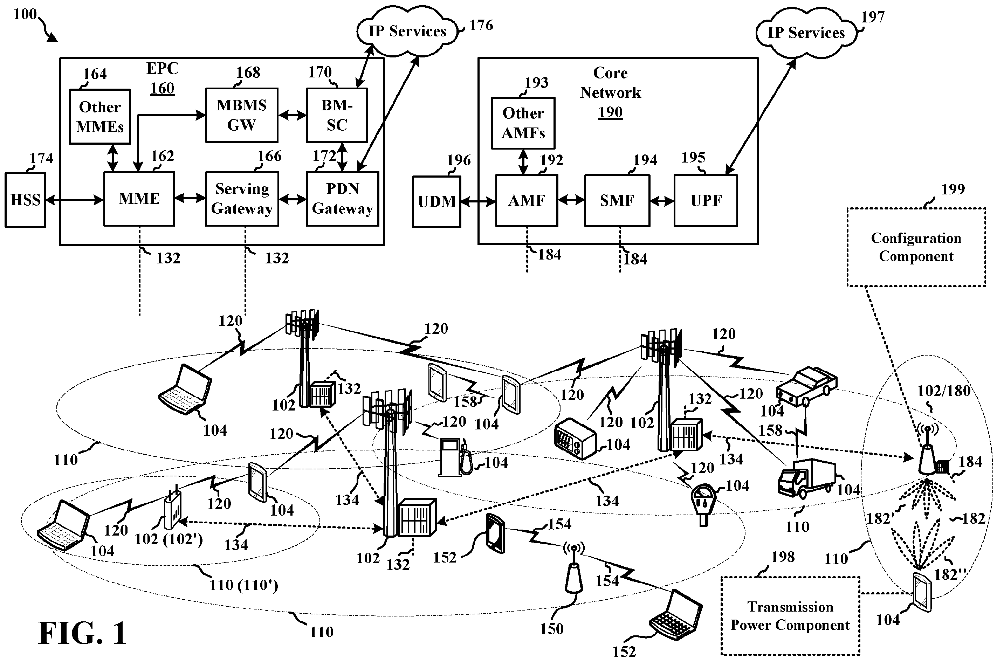

FIG. 1 is a diagram illustrating an example of a wireless communications system and an access network 100. The wireless communications system (also referred to as a wireless wide area network (WWAN)) includes base stations 102, UEs 104, an Evolved Packet Core (EPC) 160, and another core network 190 (e.g., a 5G Core (5GC)). The base stations 102 may include macrocells (high power cellular base station) and/or small cells (low power cellular base station). The macrocells include base stations. The small cells include femtocells, picocells, and microcells.

The base stations 102 configured for 4G LTE (collectively referred to as Evolved Universal Mobile Telecommunications System (UMTS) Terrestrial Radio Access Network (E-UTRAN)) may interface with the EPC 160 through backhaul links 132 (e.g., S1 interface). The base stations 102 configured for 5G/NR (collectively referred to as Next Generation RAN (NG-RAN)) may interface with core network 190 through backhaul links 184. In addition to other functions, the base stations 102 may perform one or more of the following functions: transfer of user data, radio channel ciphering and deciphering, integrity protection, header compression, mobility control functions (e.g., handover, dual connectivity), inter-cell interference coordination, connection setup and release, load balancing, distribution for non-access stratum (NAS) messages, NAS node selection, synchronization, radio access network (RAN) sharing, multimedia broadcast multicast service (MBMS), subscriber and equipment trace, RAN information management (RIM), paging, positioning, and delivery of warning messages. The base stations 102 may communicate directly or indirectly (e.g., through the EPC 160 or core network 190) with each other over backhaul links 134 (e.g., X2 interface). The backhaul links 134 may be wired or wireless.

The base stations 102 may wirelessly communicate with the UEs 104. Each of the base stations 102 may provide communication coverage for a respective geographic coverage area 110. There may be overlapping geographic coverage areas 110. For example, the small cell 102' may have a coverage area 110' that overlaps the coverage area 110 of one or more macro base stations 102. A network that includes both small cell and macrocells may be known as a heterogeneous network. A heterogeneous network may also include Home Evolved Node Bs (eNBs) (HeNBs), which may provide service to a restricted group known as a closed subscriber group (CSG). The communication links 120 between the base stations 102 and the UEs 104 may include uplink (UL) (also referred to as reverse link) transmissions from a UE 104 to a base station 102 and/or downlink (DL) (also referred to as forward link) transmissions from a base station 102 to a UE 104. The communication links 120 may use multiple-input and multiple-output (MIMO) antenna technology, including spatial multiplexing, beamforming, and/or transmit diversity. The communication links may be through one or more carriers. The base stations 102 / UEs 104 may use spectrum up to *Y* MHz (e.g., 5, 10, 15, 20, 100, 400, etc. MHz) bandwidth per carrier allocated in a carrier aggregation of up to a total of Yx MHz (x component carriers) used for transmission in each direction. The carriers may or may not be adjacent to each other. Allocation of carriers may be asymmetric with respect to DL and UL (e.g., more or fewer carriers may be allocated for DL than for UL). The component carriers may include a primary component carrier and one or more secondary component carriers. A primary component carrier may be referred to as a primary cell (PCell) and a secondary component carrier may be referred to as a secondary cell (SCell).

Some UEs 104 may communicate with each other using device-to-device (D2D) communication link 158. The D2D communication link 158 may use the DL/UL WWAN spectrum. The D2D communication link 158 may use one or more sidelink channels, such as a physical sidelink broadcast channel (PSBCH), a physical sidelink discovery channel (PSDCH), a physical sidelink shared channel (PSSCH), and a physical sidelink control channel (PSCCH). D2D communication may be through a variety of wireless D2D communications systems, such as for example, FlashLinQ, WiMedia, Bluetooth, ZigBee, Wi-Fi based on the IEEE 802.11 standard, LTE, or NR.

The wireless communications system may further include a Wi-Fi access point (AP) 150 in communication with Wi-Fi stations (STAs) 152 via communication links 154 in a 5 GHz unlicensed frequency spectrum. When communicating in an unlicensed frequency spectrum, the STAs 152 / AP 150 may perform a clear channel assessment (CCA) prior to communicating in order to determine whether the channel is available.

The small cell 102' may operate in a licensed and/or an unlicensed frequency spectrum. When operating in an unlicensed frequency spectrum, the small cell 102' may employ NR and use the same 5 GHz unlicensed frequency spectrum as used by the Wi-Fi AP 150. The small cell 102', employing NR in an unlicensed frequency spectrum, may boost coverage to and/or increase capacity of the access network.

A base station 102, whether a small cell 102' or a macrocell (e.g., macro base station), may include an eNB, gNodeB (gNB), or another type of base station. Some base stations 180, such as a gNB, may operate in a traditional sub 6 GHz spectrum, in millimeter wave (mmW) frequencies, and/or near mmW frequencies in communication with the UE 104. When the gNB, e.g., base station 180, operates in mmW or near mmW frequencies, the gNB may be referred to as an mmW base station. Extremely high frequency (EHF) is part of the RF in the electromagnetic spectrum. EHF has a range of 30 GHz to 300 GHz and a wavelength between 1 millimeter and 10 millimeters. Radio waves in the band may be referred to as a millimeter wave. Near mmW may extend down to a frequency of 3 GHz with a wavelength of 100 millimeters. The super high frequency (SHF) band extends between 3 GHz and 30 GHz, also referred to as centimeter wave. Communications using the mmW / near mmW radio frequency band (e.g., 3 GHz - 300 GHz) has extremely high path loss and a short range. The mmW base station, e.g., base station 180, may utilize beamforming 182 with the UE 104 to compensate for the extremely high path loss and short range.

The base station 180 may transmit a beamformed signal to the UE 104 in one or more transmit directions 182'. The UE 104 may receive the beamformed signal from the base station 180 in one or more receive directions 182". The UE 104 may also transmit a beamformed signal to the base station 180 in one or more transmit directions. The base station 180 may receive the beamformed signal from the UE 104 in one or more receive directions. The base station 180 / UE 104 may perform beam training to determine the best receive and transmit directions for each of the base station 180 / UE 104. The transmit and receive directions for the base station 180 may or may not be the same. The transmit and receive directions for the UE 104 may or may not be the same.

The EPC 160 may include a Mobility Management Entity (MME) 162, other MMEs 164, a Serving Gateway 166, a Multimedia Broadcast Multicast Service (MBMS) Gateway 168, a Broadcast Multicast Service Center (BM-SC) 170, and a Packet Data Network (PDN) Gateway 172. The MME 162 may be in communication with a Home Subscriber Server (HSS) 174. The MME 162 is the control node that processes the signaling between the UEs 104 and the EPC 160. Generally, the MME 162 provides bearer and connection management. All user Internet protocol (IP) packets are transferred through the Serving Gateway 166, which itself is connected to the PDN Gateway 172. The PDN Gateway 172 provides UE IP address allocation as well as other functions. The PDN Gateway 172 and the BM-SC 170 are connected to the IP Services 176. The IP Services 176 may include the Internet, an intranet, an IP Multimedia Subsystem (IMS), a PS Streaming Service, and/or other IP services. The BM-SC 170 may provide functions for MBMS user service provisioning and delivery. The BM-SC 170 may serve as an entry point for content provider MBMS transmission, may be used to authorize and initiate MBMS Bearer Services within a public land mobile network (PLMN), and may be used to schedule MBMS transmissions. The MBMS Gateway 168 may be used to distribute MBMS traffic to the base stations 102 belonging to a Multicast Broadcast Single Frequency Network (MBSFN) area broadcasting a particular service, and may be responsible for session management (start/stop) and for collecting eMBMS related charging information.

The core network 190 may include a Access and Mobility Management Function (AMF) 192, other AMFs 193, a Session Management Function (SMF) 194, and a User Plane Function (UPF) 195. The AMF 192 may be in communication with a Unified Data Management (UDM) 196. The AMF 192 is the control node that processes the signaling between the UEs 104 and the core network 190. Generally, the AMF 192 provides QoS flow and session management. All user Internet protocol (IP) packets are transferred through the UPF 195. The UPF 195 provides UE IP address allocation as well as other functions. The UPF 195 is connected to the IP Services 197. The IP Services 197 may include the Internet, an intranet, an IP Multimedia Subsystem (IMS), a PS Streaming Service, and/or other IP services.

The base station may also be referred to as a gNB, Node B, evolved Node B (eNB), an access point, a base transceiver station, a radio base station, a radio transceiver, a transceiver function, a basic service set (BSS), an extended service set (ESS), a transmit reception point (TRP), or some other suitable terminology. The base station 102 provides an access point to the EPC 160 or core network 190 for a UE 104. Examples of UEs 104 include a cellular phone, a smart phone, a session initiation protocol (SIP) phone, a laptop, a personal digital assistant (PDA), a satellite radio, a global positioning system, a multimedia device, a video device, a digital audio player (e.g., MP3 player), a camera, a game console, a tablet, a smart device, a wearable device, a vehicle, an electric meter, a gas pump, a large or small kitchen appliance, a healthcare device, an implant, a sensor/actuator, a display, or any other similar functioning device. Some of the UEs 104 may be referred to as IoT devices (e.g., parking meter, gas pump, toaster, vehicles, heart monitor, etc.). The UE 104 may also be referred to as a station, a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology.

Referring again to FIG. 1, in some aspects, the UE 104 may be configured to apply different power control commands for particular transmissions on a same channel. As an example, in FIG. 1, the UE 104 includes a transmission power component 198 configured to determine a first transmission power for a first transmission using a first transmission power control parameter. The example transmission power component 198 is also configured to transmit the first transmission using the first transmission power. Additionally, the example transmission power component 198 is configured to determine a second transmission power for a re-transmission using a second transmission power control parameter. Further, the example transmission power component 198 is configured to transmit the re-transmission using the second transmission power.

Referring still to FIG. 1, in some aspects, the base station 180 may be configured to facilitate applying different power control commands for particular transmissions on a same channel. As an example, in FIG. 1, the base station 180 includes a configuration component 199 configured to transmit a first power control command to a User Equipment (UE) for determining a first transmission power for a first transmission. The example configuration component 199 is also configured to transmit a second power control command to the UE for determining a second transmission power for a re-transmission. Further, the example configuration component 199 is configured to indicate a power offset to the UE for use in determining the second transmission power for the re-transmission.

Although the following description is focused on uplink communications, it should be appreciated that the concepts described herein may be applicable to sidelink communications and/or downlink communications. Furthermore, although the following description may be focused on 5G/NR, the concepts described herein may be applicable to other similar areas, such as LTE, LTE-A, CDMA, GSM, and/or other wireless technologies, in which it may be beneficial to apply different transmit powers for particular transmissions on a same channel.

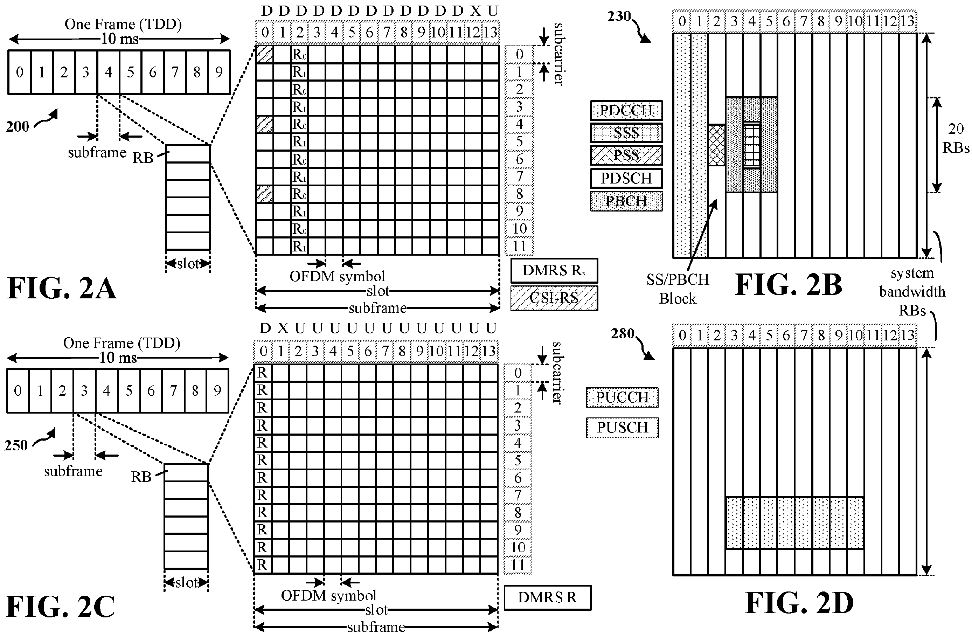

FIG. 2A is a diagram 200 illustrating an example of a first subframe within a 5G/NR frame structure. FIG. 2B is a diagram 230 illustrating an example of DL channels within a 5G/NR subframe. FIG. 2C is a diagram 250 illustrating an example of a second subframe within a 5G/NR frame structure. FIG. 2D is a diagram 280 illustrating an example of UL channels within a 5G/NR subframe. The 5G/NR frame structure may be FDD in which for a particular set of subcarriers (carrier system bandwidth), subframes within the set of subcarriers are dedicated for either DL or UL, or may be TDD in which for a particular set of subcarriers (carrier system bandwidth), subframes within the set of subcarriers are dedicated for both DL and UL. In the examples provided by FIGs. 2A, 2C, the 5G/NR frame structure is assumed to be TDD, with subframe 4 being configured with slot format 28 (with mostly DL), where D is DL, U is UL, and X is flexible for use between DL/UL, and subframe 3 being configured with slot format 34 (with mostly UL). While subframes 3, 4 are shown with slot formats 34, 28, respectively, any particular subframe may be configured with any of the various available slot formats 0-61. Slot formats 0, 1 are all DL, UL, respectively. Other slot formats 2-61 include a mix of DL, UL, and flexible symbols. UEs are configured with the slot format (dynamically through DL control information (DCI), or semi-statically/statically through radio resource control (RRC) signaling) through a received slot format indicator (SFI). Note that the description *infra* applies also to a 5G/NR frame structure that is TDD.

Other wireless communication technologies may have a different frame structure and/or different channels. A frame (10 ms) may be divided into 10 equally sized subframes (1 ms). Each subframe may include one or more time slots. Subframes may also include mini-slots, which may include 7, 4, or 2 symbols. Each slot may include 7 or 14 symbols, depending on the slot configuration. For slot configuration 0, each slot may include 14 symbols, and for slot configuration 1, each slot may include 7 symbols. The symbols on DL may be cyclic prefix (CP) OFDM (CP-OFDM) symbols. The symbols on UL may be CP-OFDM symbols (for high throughput scenarios) or discrete Fourier transform (DFT) spread OFDM (DFT-s-OFDM) symbols (also referred to as single carrier frequency-division multiple access (SC-FDMA) symbols) (for power limited scenarios; limited to a single stream transmission). The number of slots within a subframe is based on the slot configuration and the numerology. For slot configuration 0, different numerologies µ 0 to 5 allow for 1, 2, 4, 8, 16, and 32 slots, respectively, per subframe. For slot configuration 1, different numerologies 0 to 2 allow for 2, 4, and 8 slots, respectively, per subframe. Accordingly, for slot configuration 0 and numerology µ, there are 14 symbols/slot and 2^{µ} slots/subframe. The subcarrier spacing and symbol length/duration are a function of the numerology. The subcarrier spacing may be equal to 2^{µ} * 15 kHz, where µ is the numerology 0 to 5. As such, the numerology µ=0 has a subcarrier spacing of 15 kHz and the numerology µ=5 has a subcarrier spacing of 480 kHz. The symbol length/duration is inversely related to the subcarrier spacing. FIGs. 2A to 2D provide an example of slot configuration 0 with 14 symbols per slot and numerology µ=0 with 1 slot per subframe. The subcarrier spacing is 15 kHz and symbol duration is approximately 66.7 µs.

A resource grid may be used to represent the frame structure. Each time slot includes a resource block (RB) (also referred to as physical RBs (PRBs)) that extends 12 consecutive subcarriers. The resource grid is divided into multiple resource elements (REs). The number of bits carried by each RE depends on the modulation scheme.

As illustrated in FIG. 2A, some of the REs carry reference (pilot) signals (RS) for the UE. The RS may include demodulation RS (DM-RS) (indicated as Rx for one particular configuration, where 100x is the port number, but other DM-RS configurations are possible) and channel state information reference signals (CSI-RS) for channel estimation at the UE. The RS may also include beam measurement RS (BRS), beam refinement RS (BRRS), and phase tracking RS (PT-RS).

FIG. 2B illustrates an example of various DL channels within a subframe of a frame. The physical downlink control channel (PDCCH) carries DCI within one or more control channel elements (CCEs), each CCE including nine RE groups (REGs), each REG including four consecutive REs in an OFDM symbol. A primary synchronization signal (PSS) may be within symbol 2 of particular subframes of a frame. The PSS is used by a UE 104 to determine subframe/symbol timing and a physical layer identity. A secondary synchronization signal (SSS) may be within symbol 4 of particular subframes of a frame. The SSS is used by a UE to determine a physical layer cell identity group number and radio frame timing. Based on the physical layer identity and the physical layer cell identity group number, the UE can determine a physical cell identifier (PCI). Based on the PCI, the UE can determine the locations of the aforementioned DM-RS. The physical broadcast channel (PBCH), which carries a master information block (MIB), may be logically grouped with the PSS and SSS to form a synchronization signal (SS)/PBCH block. The MIB provides a number of RBs in the system bandwidth and a system frame number (SFN). The physical downlink shared channel (PDSCH) carries user data, broadcast system information not transmitted through the PBCH such as system information blocks (SIBs), and paging messages.

As illustrated in FIG. 2C, some of the REs carry DM-RS (indicated as R for one particular configuration, but other DM-RS configurations are possible) for channel estimation at the base station. The UE may transmit DM-RS for the physical uplink control channel (PUCCH) and DM-RS for the physical uplink shared channel (PUSCH). The PUSCH DM-RS may be transmitted in the first one or two symbols of the PUSCH. The PUCCH DM-RS may be transmitted in different configurations depending on whether short or long PUCCHs are transmitted and depending on the particular PUCCH format used. Although not shown, the UE may transmit sounding reference signals (SRS). The SRS may be used by a base station for channel quality estimation to enable frequency-dependent scheduling on the UL.

FIG. 2D illustrates an example of various UL channels within a subframe of a frame. The PUCCH may be located as indicated in one configuration. The PUCCH carries uplink control information (UCI), such as scheduling requests, a channel quality indicator (CQI), a precoding matrix indicator (PMI), a rank indicator (RI), and HARQ ACK/NACK feedback. The PUSCH carries data, and may additionally be used to carry a buffer status report (BSR), a power headroom report (PHR), and/or UCI.

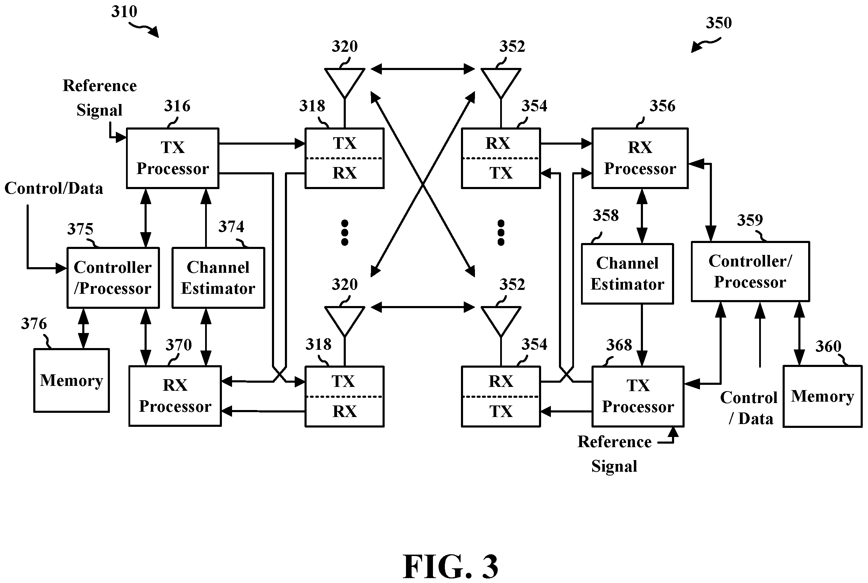

FIG. 3 is a block diagram of a base station 310 in communication with a UE 350 in an access network. In the DL, IP packets from the EPC 160 may be provided to a controller/processor 375. The controller/processor 375 implements layer 3 and layer 2 functionality. Layer 3 includes a radio resource control (RRC) layer, and layer 2 includes a service data adaptation protocol (SDAP) layer, a packet data convergence protocol (PDCP) layer, a radio link control (RLC) layer, and a medium access control (MAC) layer. The controller/processor 375 provides RRC layer functionality associated with broadcasting of system information (e.g., MIB, SIBs), RRC connection control (e.g., RRC connection paging, RRC connection establishment, RRC connection modification, and RRC connection release), inter radio access technology (RAT) mobility, and measurement configuration for UE measurement reporting; PDCP layer functionality associated with header compression / decompression, security (ciphering, deciphering, integrity protection, integrity verification), and handover support functions; RLC layer functionality associated with the transfer of upper layer packet data units (PDUs), error correction through ARQ, concatenation, segmentation, and reassembly of RLC service data units (SDUs), re-segmentation of RLC data PDUs, and reordering of RLC data PDUs; and MAC layer functionality associated with mapping between logical channels and transport channels, multiplexing of MAC SDUs onto transport blocks (TBs), demultiplexing of MAC SDUs from TBs, scheduling information reporting, error correction through HARQ, priority handling, and logical channel prioritization.

The transmit (TX) processor 316 and the receive (RX) processor 370 implement layer 1 functionality associated with various signal processing functions. Layer 1, which includes a physical (PHY) layer, may include error detection on the transport channels, forward error correction (FEC) coding/decoding of the transport channels, interleaving, rate matching, mapping onto physical channels, modulation/demodulation of physical channels, and MIMO antenna processing. The TX processor 316 handles mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM)). The coded and modulated symbols may then be split into parallel streams. Each stream may then be mapped to an OFDM subcarrier, multiplexed with a reference signal (e.g., pilot) in the time and/or frequency domain, and then combined together using an Inverse Fast Fourier Transform (IFFT) to produce a physical channel carrying a time domain OFDM symbol stream. The OFDM stream is spatially precoded to produce multiple spatial streams. Channel estimates from a channel estimator 374 may be used to determine the coding and modulation scheme, as well as for spatial processing. The channel estimate may be derived from a reference signal and/or channel condition feedback transmitted by the UE 350. Each spatial stream may then be provided to a different antenna 320 via a separate transmitter 318TX. Each transmitter 318TX may modulate an RF carrier with a respective spatial stream for transmission.

At the UE 350, each receiver 354RX receives a signal through its respective antenna 352. Each receiver 354RX recovers information modulated onto an RF carrier and provides the information to the receive (RX) processor 356. The TX processor 368 and the RX processor 356 implement layer 1 functionality associated with various signal processing functions. The RX processor 356 may perform spatial processing on the information to recover any spatial streams destined for the UE 350. If multiple spatial streams are destined for the UE 350, they may be combined by the RX processor 356 into a single OFDM symbol stream. The RX processor 356 then converts the OFDM symbol stream from the time-domain to the frequency domain using a Fast Fourier Transform (FFT). The frequency domain signal comprises a separate OFDM symbol stream for each subcarrier of the OFDM signal. The symbols on each subcarrier, and the reference signal, are recovered and demodulated by determining the most likely signal constellation points transmitted by the base station 310. These soft decisions may be based on channel estimates computed by the channel estimator 358. The soft decisions are then decoded and deinterleaved to recover the data and control signals that were originally transmitted by the base station 310 on the physical channel. The data and control signals are then provided to the controller/processor 359, which implements layer 3 and layer 2 functionality.

The controller/processor 359 can be associated with a memory 360 that stores program codes and data. The memory 360 may be referred to as a computer-readable medium. In the UL, the controller/processor 359 provides demultiplexing between transport and logical channels, packet reassembly, deciphering, header decompression, and control signal processing to recover IP packets from the EPC 160. The controller/processor 359 is also responsible for error detection using an ACK and/or NACK protocol to support HARQ operations.

Similar to the functionality described in connection with the DL transmission by the base station 310, the controller/processor 359 provides RRC layer functionality associated with system information (e.g., MIB, SIBs) acquisition, RRC connections, and measurement reporting; PDCP layer functionality associated with header compression / decompression, and security (ciphering, deciphering, integrity protection, integrity verification); RLC layer functionality associated with the transfer of upper layer PDUs, error correction through ARQ, concatenation, segmentation, and reassembly of RLC SDUs, re-segmentation of RLC data PDUs, and reordering of RLC data PDUs; and MAC layer functionality associated with mapping between logical channels and transport channels, multiplexing of MAC SDUs onto TBs, demultiplexing of MAC SDUs from TBs, scheduling information reporting, error correction through HARQ, priority handling, and logical channel prioritization.

Channel estimates derived by a channel estimator 358 from a reference signal or feedback transmitted by the base station 310 may be used by the TX processor 368 to select the appropriate coding and modulation schemes, and to facilitate spatial processing. The spatial streams generated by the TX processor 368 may be provided to different antenna 352 via separate transmitters 354TX. Each transmitter 354TX may modulate an RF carrier with a respective spatial stream for transmission.

The UL transmission is processed at the base station 310 in a manner similar to that described in connection with the receiver function at the UE 350. Each receiver 318RX receives a signal through its respective antenna 320. Each receiver 318RX recovers information modulated onto an RF carrier and provides the information to a RX processor 370.

The controller/processor 375 can be associated with a memory 376 that stores program codes and data. The memory 376 may be referred to as a computer-readable medium. In the UL, the controller/processor 375 provides demultiplexing between transport and logical channels, packet reassembly, deciphering, header decompression, control signal processing to recover IP packets from the UE 350. IP packets from the controller/processor 375 may be provided to the EPC 160. The controller/processor 375 is also responsible for error detection using an ACK and/or NACK protocol to support HARQ operations.

At least one of the TX processor 368, the RX processor 356, and the controller/processor 359 of the UE 350 may be configured to perform aspects in connection with the transmission power component 198 of FIG. 1.

At least one of the TX processor 316, the RX processor 370, and the controller/processor 375 may be configured to perform aspects in connection with the configuration component 199 of FIG. 1.

Techniques for power control management may apply a power control (PC) command (sometimes referred to as a "power control adjustment" or a "power control correction") for transmissions communicated via specific channels to modify (or adjust) the transmission power of the transmissions. In some such examples, power control techniques may attempt to use a minimum power to enable a communication device (e.g., a UE) to adequately transmit a communication. In some examples, power control techniques may be used to adjust the transmission power for a particular channel. For example, a first power control setting (or parameter) may be used to adjust the transmission power for transmissions communicated via PUSCH. Transmissions communicated via other channels, such as PUCCH and/or SRS. may use different transmission powers. However, different transmissions on the same channel may have different reliability requirements. For example, a relatively high error rate target may be desirable for first transmissions (first Tx), while a relatively low error rate target may be acceptable for re-transmissions (ReTx). The higher error rate target of the first Tx may help a power control loop to converge relatively quickly. In contrast, the relatively low error rate target for the re-transmission(s) may cause the power control loop to converge more quickly than for the first Tx. This may lead to a problem in which the transmit power for one type of transmission, e.g., a re-transmission, may not be met by the transmit power for another type of transmission, e.g., a first Tx.

Aspects provided herein provide a solution to this problem by providing different power control for a first type of transmission and a second type of transmission on the same channel. For example, aspects presented herein may employ separate transmit power control settings (or parameters) for first transmissions and for re-transmissions that are communicated on a same channel. For example, disclosed techniques include a UE determining a UE transmit power for the UE by enabling accumulating transmission power for first transmission(s), and determining a UE transmit power for the UE by disabling (or without) accumulating transmission power for re-transmission(s). Additionally, a separate power boost may be applied to the re-transmission(s), e.g., in order to improve convergence and/or to meet the lower error rate targets.

In some examples, the UE transmit power of the UE (PTx) (sometimes referred to herein as "transmission power") may be a function of a closed loop power control mode using transmission power accumulation based on a previous transmission power (e.g., is a function of a previous UE transmit power) and a power control command provided by the base station (sometimes referred to as an "accumulating power control mode"). The closed loop power control mode may help to address short term channel variation that may be problematic with an open loop power control mode. In some examples, the UE transmit power of the UE may be a function of a closed loop power control mode without using transmission power accumulation based on a previous transmission power (sometimes referred to as a "non-accumulating power control mode" or an "absolute power control mode"). The closed loop power control mode with transmission power accumulation disabled may allow for application of a relatively larger power boost to ensure reliability, e.g., for a type of transmission. By disabling transmission power accumulation for one type of transmission, a power boost may be applied without interfering with the different power control target levels of a different type of transmission on the same channel. It should be appreciated that in different aspects, different power offsets may be achieved by configuring different receiver sensitivity values for first transmission and re-transmissions. The power offset may include a power boost for first transmissions or for re-transmissions.

In some examples, different transmit power for different types of transmissions may be determined based on configured target transmit power information. For example, a UE may receive a first configured target transmit power for a first transmission and may receive a second configured target transmit power for a re-transmission. In some examples, the first configured target transmit power and the second configured target transmit power may be received via RRC signaling. For example, the first configured target transmit power and the second configured target transmit power may be provided by a base station to the UE during an initial RRC configuration. In some examples, the configured target transmit power may also be re-configured (e.g., at a later time, such as after the initial configuration). For example, the first configured target transmit power and/or the second configured target transmit power may be reconfigured via RRC signaling and/or MAC-CE.

Although the following describe provides examples in which a first transmission is transmitted following a re-transmission, it should be appreciated that the re-transmission is not limited to a particular re-transmission of the transmission. That is, unless indicated otherwise, it should be appreciated that a reference to a re-transmission may refer to a first occurrence of a re-transmission, a second occurrence of a re-transmission, etc.

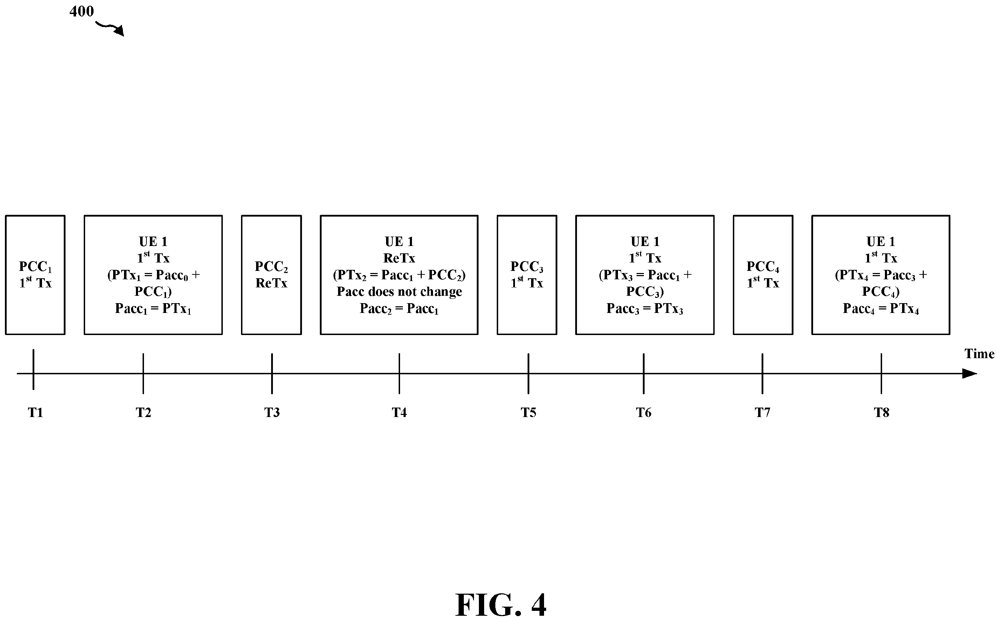

FIG. 4 is a flow diagram 400 illustrating example aspects of applying different power control commands for particular transmissions communicated on a same channel (e.g., by a UE). The illustrated example of FIG. 4 may be applied for different types of transmissions on any channel (e.g., different types of transmissions on PUSCH, different types of transmissions on PUCCH, etc.). In FIG. 4, the example aspects are described using a first transmission and re-transmission(s) as the two types of transmission. The first transmission(s) and the re-transmission(s) may both be PUSCH transmissions, for example. In some examples, the UE may receive the power control commands via Downlink Control Information (DCI). In some examples, the UE may receive the power control commands via RRC signaling, such as via an RRC message.

In the illustrated example of FIG. 4, the UE applies transmission power accumulation for first transmissions and does not accumulate transmission power for re-transmissions. Thus, a transmission power control accumulation parameter (or setting) may be enabled for first transmission type communications and the transmission power control accumulation parameter (or setting) may disabled for re-transmission type communications. Accumulation of transmission power control may be indicated by a parameter, e.g., *tpc-Accumulation*, which may be enabled for one type of transmission on a channel (e.g., a first transmission), and may disabled for another type of transmission (e.g., a re-transmission), on the same channel.

As shown in FIG. 4, the UE receives a first power control command for a first transmission at a first time (T1) (PCC₁). At a second time (T2), the UE determines a first UE transmit power (PTx₁) based on the first power control command (PCC₁) received at the first time (T1) and any accumulated transmission power (Pacc₀) for a communication (e.g., the first transmission). The UE may also transmit the first transmission using the determined first UE transmit power (PTx₁) at the second time (T2). As shown in FIG. 4, the UE may also update the value of the accumulated transmission power (Pacc) based on the first UE transmit power. For example, the UE may update the accumulated transmission power (Pacc) so that a next accumulated transmission power (Pacc₁) equals the first UE transmit power (PTx₁).

As shown in FIG. 4, at a later third time (T3), the UE receives a second power control command (PCC₂) for a re-transmission of the first transmission (e.g., the transmission transmitted at the second time (T2). The UE then determines, at a fourth time (T4), a second UE transmit power (PTx₂) for the re-transmission. For example, similar to the determination of the first UE transmit power (PTx₁), the UE may determine the UE transmit power for the re-transmission (e.g., second UE transmit power (PTx₂)) based on a current accumulated transmission power and a current power control command. In the illustrated example, the second UE transmit power (PTx₂) is equal to the sum of the current accumulated transmission power (e.g., the first accumulated transmission power (Pacc₁)) and the current power control command (e.g., the second power control command (PCC₂))At the fourth time (T4), the UE may also transmit the re-transmission using the determined second UE transmit power (PTx₂). However, because the transmission power control accumulation parameter is disabled for re-transmissions in this example, the UE does not update the value of the accumulated transmission power (Pacc) based on the second UE transmit power (PTx₂). That is, in the illustrated example, value of the accumulated transmission power (Pacc) does not change and the value of the subsequent accumulated transmission power (Pacc₂)remains the same as the first accumulated transmission power (Pacc₁)).

As noted above, it should be appreciated that the re-transmission communicated at the fourth time (T₄) may be a first re-transmission, may be a second re-transmission, etc. of, for example, the first transmission communicated at the second time (T2).

At a later, fifth time (T₅), the UE receives a third power control command (PCC₃) for another first transmission. At a sixth time (T6), the UE determines a third UE transmit power (PTx₃) based on the current power control command (e.g., the third power control command (PCC₃) received at time (T₅) and the current accumulated transmission power (e.g., the second accumulated transmission power (Pacc₂), which did not change in value (e.g., was not accumulated) based on the transmit power of the re-transmission at the fourth time (T4) (e.g., the second UE transmit power (PTx₂). The UE transmits the current first transmission using the determined third UE transmit power (PTx₃) that was determined at the sixth time (T6). The UE also updates the value of the accumulated transmission power (Pacc) based on the third UE transmit power (PTx₂). For example, the UE may update the accumulated transmission power (Pacc) so that a next accumulated transmission power (Pacc₃) equals the third UE transmit power (PTx₃).

Similarly, at a later seventh time (T₇), the UE receives another power control command (PCC₄) for another first transmission. At an eighth time (T8), the UE determines a fourth UE transmit power (PTx₄) based on the current power control command (e.g., the fourth power control command (PCC₄) received at seventh time (T₇) and the current accumulated transmission power (e.g., the third accumulated transmission power (Pacc₃)). The UE transmits the current first transmission using the determined fourth UE transmit power (PTx₄) that was determined at the eighth time (T8). The UE may also update the value of the accumulated transmission power (Pacc) based on the fourth UE transmit power (PTx₄). For example, the UE may update the accumulated transmission power (Pacc) so that a next accumulated transmission power (Pacc₄) equals the fourth UE transmit power (PTx₄).

In this manner, the UE may apply different power control commands for different types of communications (e.g., first transmissions and re-transmissions) that are communicated on a same channel. Although a single re-transmission is described in connection with the example of FIG. 4, in order to illustrate the principle of using different power control for first transmissions and for re-transmissions, it should be appreciated that the disclosed principles can be extended to any number and pattern of first transmissions and re-transmissions. For example, the UE may determine a transmission power for multiple re-transmissions between the first transmission at the second time (T2) and the first transmission at the sixth time (T6). Similarly, at least one re-transmission may be transmitted between the sixth time (T6) and the eighth time (T8).

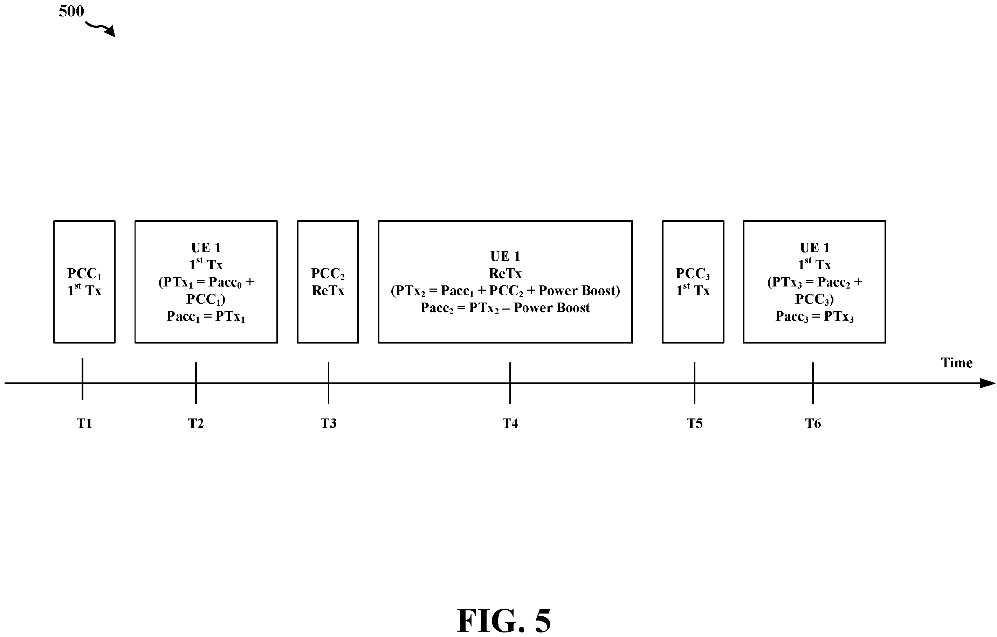

FIG. 5 is a diagram 500 illustrating another example of applying different power control commands for particular transmissions communicated on a same channel (e.g., by a UE). In the illustrated example, the Similar to the first transmissions of the example flow diagram 400 of FIG. 4, a UE transmit power (PTx) for a first transmission may be based on a power control command received from a base station and a current accumulated transmission power (Pacc). For example, in the illustrated example, the UE receives a power control command (PCC₁) for a first transmission at a first time (T1) and also receives a power control command (PCC₃) for another first transmission at a later fifth time (T₅). Following the transmissions of the respective first transmissions (e.g., at a second time (T2) and a sixth time (T6)), the UE updates the respective accumulated transmission power (Pacc) based on the UE transmit power used for transmitting the respective first transmission. For example, at the second time (T2), the UE may update the value of the next accumulated transmission power (Pacc₁) to equal the first UE transmit power (PTx₁), and at the sixth time (T6), the UE may update the value of the next accumulated transmission power (Pacc₂) to equal the third UE transmit power (PTx₃).

In some examples, the power control command for a re-transmission (e.g., a second power control command (PCC₂) received at a third time (T3)) may include a power boost indicated to the UE (e.g., by a base station). For example, the power boost may be received via RRC signaling, such as via an RRC message. The power boost may be a configurable power boost (or offset) based on, for example, a bit rate or a transmit format. In some such examples, the UE may determine the UE transmit power (PTx) for transmitting the re-transmission based on the current accumulated transmission power (Pacc), the current power control command (PCC), and the power boost. For example, as shown in FIG. 5, at the fourth time (T4), the UE may determine the second UE transmit power (PTx₂) as a sum of the first accumulated transmission power (Pacc₁), the second power control command (PCC₂), and the power boost.

After transmitting the re-transmission at the determined second UE transmit power (PTx₂) at the fourth time (T4), the UE may then update the subsequent accumulated transmission power (Pacc) based on the second UE transmit power (PTx₂) and the power boost. For example, at the fourth time (T4), the UE may set the subsequent accumulated transmission power (Pacc₂) by subtracting the applied power boost from the second UE transmit power (PTx₂).

Similar to the example in FIG. 4, the transmission power for the re-transmission in FIG. 5 might not be accumulated. In the example of FIG. 4, the when the transmission power control accumulation parameter is disabled (e.g., for the re-transmission), then the value of the subsequent accumulated transmission power (Paccₙ₊₁) is the same as the value of the current accumulated transmission power (Paccₙ). However, in some examples, a power control command (PCC) may include a parameter (or flag) to indicate (e.g., dynamically indicate) to the UE whether the UE is to update the accumulated transmission power (Pacc) based on the power boost and/or to determine the UE transmit power for a particular type of transmission (e.g., a re-transmission) based on the power boost. For example, when a power boost parameter is enabled, the UE may determine a current UE transmit power (PTx) (e.g., for a re-transmission) based on the current accumulated transmission power (Pacc), the current power control command (PCC), and the power boost. Additionally or alternatively, the UE may update the accumulated transmission power (Pacc) so that the determining of the subsequent accumulated transmission power removes the applied power boost (as shown in the determination of the second accumulated transmission power (Pacc₂) at the fourth time (T4) of FIG. 5).

In contrast, when the power boost parameter is not enabled, the UE may not determine a current UE transmit power (PTx) (e.g., for a re-transmission) based on a power boost (as shown in the determination of the second UE transmit power (PTx₂) at the fourth time (T4) of FIG. 4). Additionally or alternatively, when the power boost parameter is not enabled (e.g., disabled), the UE may update the accumulated transmission power (Pacc) without taking into consideration any power boost. For example, the UE may update the subsequent accumulated transmission power without removing any power boost (as shown in the determination of the second accumulated transmission power (Pacc₂) at the fourth time (T4) of FIG. 4).

Thus, it should be appreciated that in some examples, a transmission power control accumulation parameter may be enabled or disabled for a particular type of communication (e.g., a first transmission, a re-transmission, etc.). Additionally, in some examples, a power boost parameter may be enabled or disabled for a particular type of communication (e.g., a first transmission, a re-transmission, etc.). Furthermore, in some examples, the value of the transmission power control accumulation parameter and/or the power boost parameter (indicating whether the respective parameter is enabled or disabled) may be received via RRC signaling.

In some examples (not shown in FIG. 5), the UE may receive power boost configuration information (e.g., from the base station) at a first point in time and then apply the respective power boost when determining the UE transmit power for a re-transmission. In some such examples, the UE may determine the UE transmit power for a subsequent first transmission without applying the respective power boost (as shown at the sixth time (T6) of FIG. 5). In this manner, the UE may apply different power control commands for first transmissions and for re-transmissions on a same channel. Furthermore, the UE may not receive a power boost (e.g., power boost configuration information) for each re-transmission.

In some examples, the UE may receive a power control command (e.g., from the base station) and then translate the received power control command to different power control commands for different types of communications. For example, the power control command received from the base station may be a value (such as a two-bit value). In some such examples, the UE may access a data structure (such as a look-up table) that enables the UE to map the received power control command value to a first power control command when determining the UE transmit power for a first transmission. When determining the UE transmit power for a re-transmission, the data structure may enable the UE to map the same received power control command value to a second power control command. Additionally, the data structure may enable the UE to map the same received power control command value to a third and/or fourth power control command for any number of subsequent re-transmissions.

It should be appreciated that in some examples, the power control command received by the UE may correspond to a configured target transmit power. The configured target transmit power may include a target transmit power that is configured for the UE for particular types of communication. For example, the base station may transmit the configured target transmit power to the UE. In some examples, the configured target transmit power may include a first configured target transmit power for a first transmission and a second configured target transmit power for a re-transmission. In some examples, the UE may receive the configured target transmit powers via RRC signaling, such as in an RRC message. For example, the UE may receive the configured target transmit power during an initial RRC configuration from the base station. In some examples, one or more configured target transmit powers may be reconfigured at a later time. For example, the UE may receive a reconfigured target transmit power for a first transmission and/or a re-transmission via RRC signaling, such as in an RRC message, and/or via MAC-CE signaling.

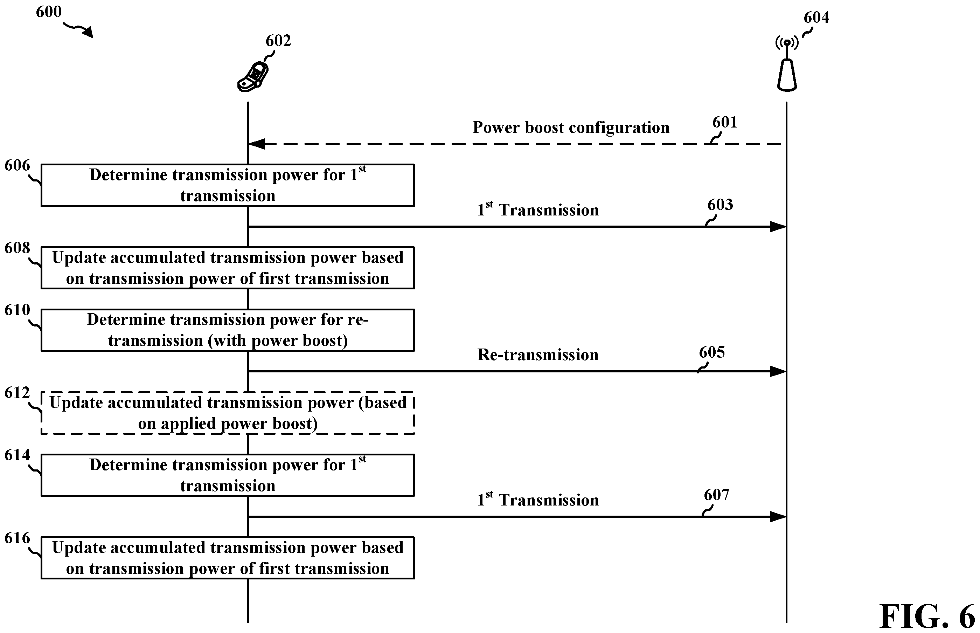

FIG. 6 is a diagram 600 illustrating a call flow diagram between a UE 602 and a base station 604 in which the UE applies different power control commands for particular transmissions on a same channel. Aspects of the UE 602 may be implemented by the UE 104 of FIG. 1 and/or the UE 350 of FIG. 3. Aspects of the base station 604 may be implemented by the base station 102 of FIG. 1 and/or the base station 310 of FIG. 3. In this example, the UE transmission power (PTx) for a first transmission or a re-transmission may be based on an accumulated transmission power (Pacc) and a power control command (PCC) provided by the base station 604. For example, the transmission power control accumulation parameter may be enabled for a first transmission and the transmission power control accumulation parameter may be disabled for a re-transmission (as described in connection with the examples of FIGS. 4 and 5).

At 606, the UE 602 determines a first transmission power (or first UE transmit power) for a first transmission 603. After determining the first transmission power (PTx₁) for the first transmission, the UE 602 transmits the first transmission 603 to the base station 604 at the determined first transmission power (PTx₁). At 608, because accumulating transmission power for first transmissions is enabled in this example, the UE 602 updates the accumulated transmission power (Pacc₁) based on the first transmission power (PTx₁) (determined at 606). For example, the UE 602 may update the value of the accumulated transmission power (Pacc₁) to be the determined first transmission power (PTx₁) (as shown at the second time (T2) in FIG. 4).

At 610, the UE 602 determines a second transmission power (PTx₂) for a re-transmission 605. After determining the second transmission power (PTx₁) for the re-transmission, the UE 602 transmits the re-transmission 605 to the base station 604 at the determined second transmission power (PTx₂). At 612, because accumulating transmission power for re-transmissions is disabled in this example, the UE 602 might not change value of the accumulated transmission power (Pacc₁) based on the determined transmission power (PTx₂) such that the value of the subsequent accumulated transmission power (Pacc₂) is the same as the current accumulated transmission power (Pacc₁) (as shown at the fourth time (T4) in FIG. 4).

At 614, the UE 602 determines a third transmission power (PTx₃) for another first transmission 607. After determining the third transmission power (PTx₃) for the other first transmission 607, the UE 602 transmits the other first transmission 607 to the base station 604 at the determined third transmission power (PTx₃). At 616, because accumulating transmission power for first transmissions is enabled in this example, the UE 602 updates the accumulated transmission power (Pacc₃) based on the determined third transmission power (PTx₃) (as shown at the sixth time (T6) and the eighth time (T8) in FIG. 4).

Although not shown, it should be appreciated that in various aspects, the base station 604 may provide the UE 602 a power control command prior to the UE 602 determining the transmission power for a first transmission or a re-transmission (as shown at the first time (T1) in FIG. 4).

In some examples, the base station 604 may provide the UE 602 with power boost configuration information 601 including a configurable power boost. For example, the base station 604 may provide the UE 602 with power boost configuration information prior to providing the UE 602 with a power control command to adjust the UE transmission power of a transmission. In other examples, the base station 604 may provide the UE 602 with power boost configuration information in addition to the power control command for determining the UE transmission power of a transmission.

In some such examples in which the base station 604 provides the UE 602 with the power boost configuration information 601, the UE 602 may use the power boost when determining the UE transmission power for a re-transmission at 610 and may not use the power boost when determining the UE transmission power for a first transmission. For example, the UE 602 may determine the UE transmission power for a re-transmission as a function of an accumulated transmission power, the power control command, and the power boost.

After transmitting the re-transmission at the determined transmission power (with power boost), the UE 602 may update the accumulated transmission power, as described in connection with FIG. 5. For example, the UE 602 may transmit the re-transmission 605 and may then update, at 612, the second accumulated transmission power (Pacc₂) as a function of the determined second transmission power (PTx₂) and the applied power boost (such as by subtracting the applied power boost from the determined second transmission power (PTx₂)) (as shown at the fourth time (T4) in FIG. 5). In other examples, when determining the second accumulated transmission power (Pacc₂) after transmitting the re-transmission 605, the UE 602 may set the second accumulated transmission power (Pacc₂) to equal the first accumulated transmission power (Pacc₁) (as described in connection with the fourth time (T4) in FIG. 4).

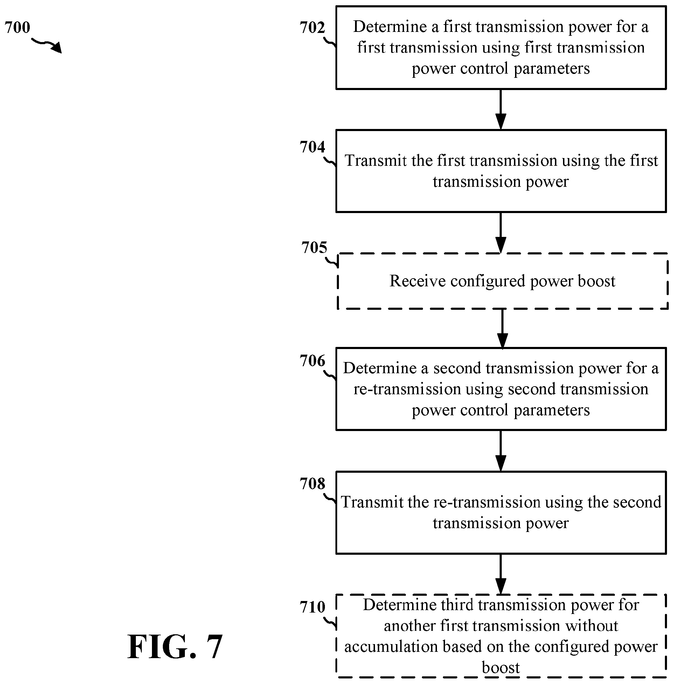

FIG. 7 is a flowchart 700 of a method of wireless communication. The method may be performed by a UE (e.g., the UE 104, the UE 350, the UE 602, the UE 1150, and/or the apparatus 802/802'). Optional aspects are illustrated with a dashed line. The method provides for improved power control that uniquely meets the needs of different types of transmissions on a same channel.

At 702, the UE determines a first transmission power (PTx₁) for a first transmission using first transmission power control parameters, e.g., as described at 606 of FIG. 6. For example, a first power control component 806 of the apparatus 802 may facilitate determining the first transmission power for the first transmission. In some examples, the first transmission power control parameters may indicate whether accumulation of transmission power control is enabled or disabled for different types of communication (e.g., a first transmission, a re-transmission, etc.). For example, a transmission power control accumulation parameter may be enabled for first transmissions and the transmission power control accumulation parameter may be disabled for re-transmissions (as described in the example flow diagrams 400, 500 of FIGs. 4 and 5, respectively). In some examples, the determining of the first transmission power may be based on an accumulated transmission power (Pacc) and a power control command (PCC₁), as described in connection with FIGS. 4 and 5. In some examples, the UE may determine the first transmission power (PTx₁) using a closed loop power control mode using transmission power accumulation based on a previous transmission power.

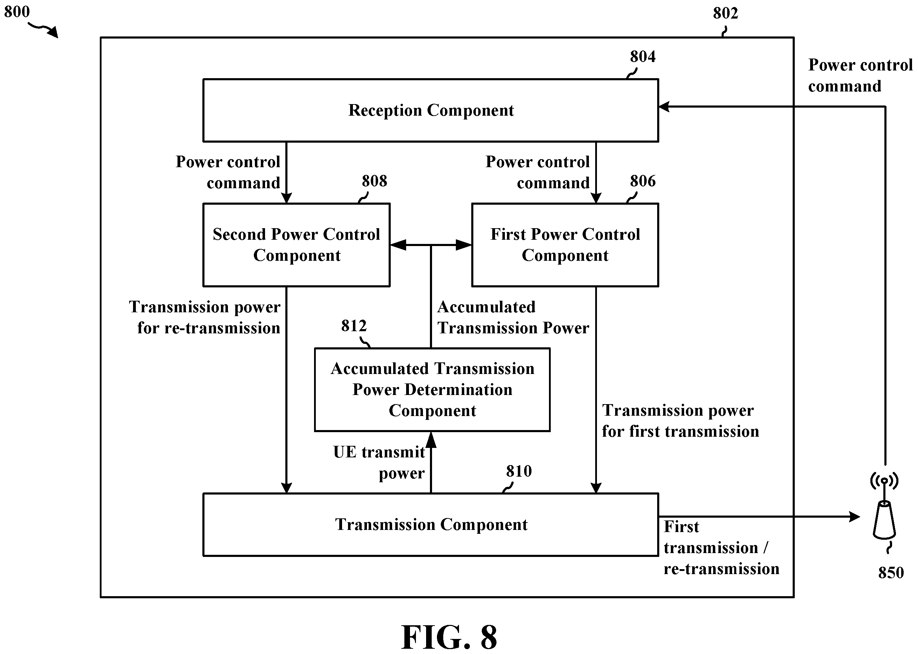

At 704, the UE transmits the first transmission using the first transmission power (PTx₁), e.g., as described at 603 of FIG. 6. For example, a transmission component 810 of the apparatus 802 may facilitate the transmitting of the first transmission using the first transmission power (PTx₁). In some examples, the first transmission power control parameters may enable the accumulation of the transmission power based on the first transmission power. For example, the transmission power control accumulation parameter may be enabled for first transmission, which enable the accumulation of the transmission power for the first transmission. In some such examples, the UE may update the accumulated transmission power based on the first transmission power, e.g., such as described in connection with the first accumulated transmission power (Pacc₁) at the second time (T2) of FIGS. 4 and 5. For example, an accumulated transmission power determination component 812 of FIG. 8 may facilitate the updating of the accumulated transmission power.

At 706, the UE determines a second transmission power (PTx₂) for a re-transmission using second transmission power control parameters, e.g., as described at 610 of FIG. 6. For example, a second power control component 808 of the apparatus 802 may facilitate the determining of the second transmission power (PTx₂) for the re-transmission. In some examples, the UE may determine the second transmission power using a second power control command (PCC₂), as described at the fourth time (T₄) of FIGs. 4 and 5. In some examples, the UE may determine the second transmission power (PTx₂) based on a power control command (PCC) received separately from a power control command associated with the determining of the first transmission power, as shown at the third times (T3) of FIGs. 4 and 5. The UE determines the second transmission power (PTx₂) based on a power boost, e.g., such as described in connection with FIG. 5. In some examples, the power boost may be a configurable power boost. The UE receives the power boost in DCI (such as from a base station), e.g., as illustrated at 705. For example, a reception component 804 of the apparatus 802 may facilitate the receiving of the power boost. In some examples, the UE may receive the power boost in an RRC message (such as from a base station).

At 708, the UE 104 transmits the re-transmission using the second transmission power (PTx₂), e.g., as described at 605 of FIG. 6. For example, the transmission component 810 of the apparatus 802 may facilitate the transmitting of the re-transmission using the second transmission power (PTx₂). In some examples, the second transmission power control parameters may include the transmission power control accumulation parameter set to disabled to prevent the updating of the accumulating transmission power used to determine the second transmission power (i.e., a non-accumulating power control mode). In some such examples, the UE may not change the value of the subsequent accumulated transmission power after transmitting the re-transmission using the second transmission power (PTx₂). Thus, similar to the example, at the second time (T2) in FIG. 4, the value of the second accumulated transmission power (Pacc₂) is the same as the first accumulated transmission power (Pacc₁). In some examples in which the UE determines the second transmission power (PTx₂) based on a power boost, the UE may update the value of accumulating transmission power by subtracting the applied power boost, e.g., as described in connection with the fourth time (T₄) of FIG. 5. For example, the accumulated transmission power determination component 812 of FIG. 8 may facilitate the updating of the accumulated transmission power.

As illustrated at 710, the UE may determine a third transmission power (PTx₃) for another first transmission subsequent to the re-transmission. The UE may determine the third transmission power (PTx₃) for another first transmission following the re-transmission, wherein the third transmission power (PTx₃) comprises an accumulated transmission power and is determined without accumulation based on the configured power boost. Thus, it should be appreciated that the transmission power control parameters may be set for particular types of communications (e.g., the transmission power control accumulation parameter may be enabled for first transmissions and the transmission power control accumulation parameter may be disabled for re-transmission) and/or the transmission power control parameters may be set for particular ones of the communications. For example, the transmission power control accumulation parameter may be enabled for a current first transmission and the transmission power control accumulation parameter may be disabled for a subsequent first transmission.

FIG. 8 is a conceptual data flow diagram 800 illustrating the data flow between different means/components in an example apparatus 802. The apparatus may be a UE, such as the UE 104, the UE 350, the UE 602, the UE 1150, and/or the apparatus 802/802'. The apparatus includes a reception component 804, a first power control component 806, a second power control component 808, a transmission component 810, and an accumulated transmission power determination component 812. In this example, the apparatus 802 is in communication with a base station 850.

The reception component 804 is configured to receive downlink communications from the base station 850 (as described in connection with, for example, 705 of FIG. 7). In this example, the received downlink communications may include a power control command to adjust the transmission power of communications transmitted by the apparatus 802. In some examples, the reception component 804 may be configured to receive the power control command via RRC signaling, such as an RRC message. However, it should be appreciated that in additional or alternative aspects, the received downlink communications may include other information, such as a configured power boost, and/or a configured target transmit power. In some examples, the reception component 804 may be configured to receive the configured power boost and/or the configured target transmit power via DCI. In some examples, the reception component 804 may be configured to receive the configured power boost and/or the configured target transmit power via an RRC message. In some examples, the reception component 804 may be configured to receive the configured power boost and/or the configured target transmit power via a MAC-CE.

The first power control component 806 may be configured to determine a transmission power for a first transmission using first transmission power control parameters (as described in connection with, for example, 702 of FIG. 7). In some examples, the first power control component 806 may be configured to determine the transmission power for the first transmission based on an accumulated transmission power and the power control command.

The second power control component 808 may be configured to determine a transmission power for a re-transmission using second transmission power control parameters (as described in connection with, for example, 706 of FIG. 7). In some examples, the second power control component 808 may be configured to determine the transmission power for the re-transmission based on an accumulated transmission power and the power control command. In some examples, the second power control component 808 may be configured to determine the transmission power for the re-transmission based on an accumulated transmission power, the power control command, and a power boost.

The transmission component 810 may be configured to transmit uplink communications to the base station 850 (as described in connection with, for example, 704 and 708 of FIG. 7). In some examples, the transmitted uplink communication may comprise a first transmission and the transmission component 810 may be configured to transmit the first transmission at a UE transmit power based on the transmission power for a first transmission. In some examples, the transmitted uplink communication may be a re-transmission and the transmission component 810 may be configured to transmit the re-transmission at a UE transit power based on the transmission power for a re-transmission.

The accumulated transmission power determination component 812 may be configured to update the accumulated transmission power (Pacc) after the transmission component 810 transmits the uplink communication (as described above in connection with, for example, 704 and 708 of FIG. 7). In some examples, the accumulated transmission power determination component 812 may be configured to update the accumulated transmission power based on whether the transmission power control accumulation parameter is enabled for a particular type of communication (e.g., a first transmission, a re-transmission, etc.) and/or a particular communication (e.g., a current first transmission, a subsequent first transmission, a first re-transmission, a second re-transmission, etc.). For example, when the transmission power control accumulation parameter is enabled, the accumulated transmission power determination component 812 may be configured to employ the accumulating power control mode by updating the accumulated transmission power based on the UE transmit power.

In some examples in which the transmission power control accumulation parameter is disabled, the accumulated transmission power determination component 812 may be configured to employ the non-accumulating power control mode by not changing the accumulated transmission power. In some examples in which the transmission power control accumulation parameter is disabled and a power boost parameter is enabled, the accumulated transmission power determination component 812 may be configured to update the accumulated transmission power by subtracting an applied power boost.

The apparatus may include additional components that perform each of the blocks of the algorithm in the aforementioned flowcharts of FIG. 7. As such, each block in the aforementioned flowcharts of FIG. 7 may be performed by a component and the apparatus may include one or more of those components. The components may be one or more hardware components specifically configured to carry out the stated processes/algorithm, implemented by a processor configured to perform the stated processes/algorithm, stored within a computer-readable medium for implementation by a processor, or some combination thereof.

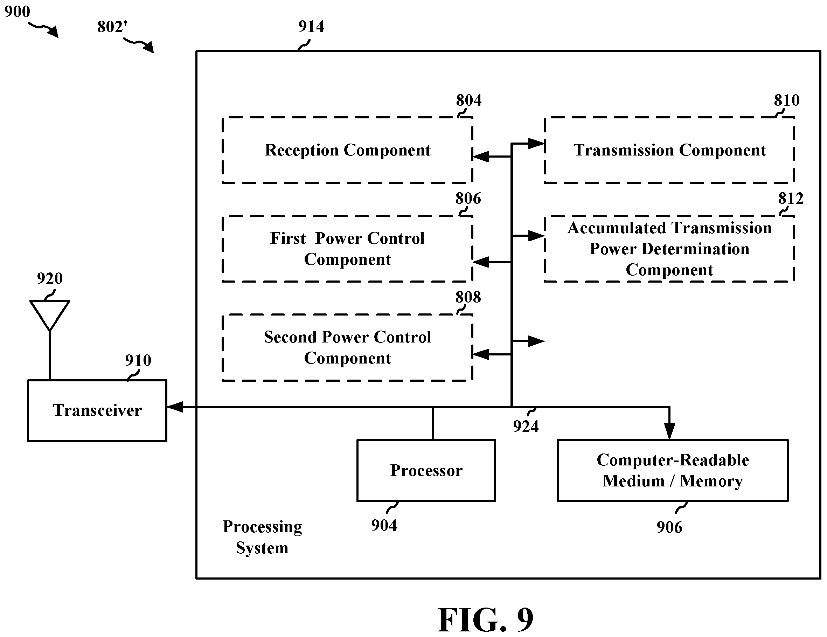

FIG. 9 is a diagram 900 illustrating an example of a hardware implementation for an apparatus 802' employing a processing system 914. The processing system 914 may be implemented with a bus architecture, represented generally by the bus 924. The bus 924 may include any number of interconnecting buses and bridges depending on the specific application of the processing system 914 and the overall design constraints. The bus 924 links together various circuits including one or more processors and/or hardware components, represented by the processor 904, the components 804, 806, 808, 810, 812, and the computer-readable medium / memory 906. The bus 924 may also link various other circuits such as timing sources, peripherals, voltage regulators, and power management circuits, which are well known in the art, and therefore, will not be described any further.

The processing system 914 may be coupled to a transceiver 910. The transceiver 910 is coupled to one or more antennas 920. The transceiver 910 provides a means for communicating with various other apparatus over a transmission medium. The transceiver 910 receives a signal from the one or more antennas 920, extracts information from the received signal, and provides the extracted information to the processing system 914, specifically the reception component 804. In addition, the transceiver 910 receives information from the processing system 914, specifically the transmission component 810, and based on the received information, generates a signal to be applied to the one or more antennas 920. The processing system 914 includes a processor 904 coupled to a computer-readable medium / memory 906. The processor 904 is responsible for general processing, including the execution of software stored on the computer-readable medium / memory 906. The software, when executed by the processor 904, causes the processing system 914 to perform the various functions described *supra* for any particular apparatus. The computer-readable medium / memory 906 may also be used for storing data that is manipulated by the processor 904 when executing software. The processing system 914 further includes at least one of the components 804, 806, 808, 810, 812. The components may be software components running in the processor 904, resident/stored in the computer readable medium / memory 906, one or more hardware components coupled to the processor 904, or some combination thereof. The processing system 914 may be a component of the UE 350 and may include the memory 360 and/or at least one of the TX processor 368, the RX processor 356, and the controller/processor 359. Alternatively, the processing system 914 may be the entire UE (e.g., see the UE 350 of FIG. 3).

In one configuration, the apparatus 802/802' for wireless communication includes means for determining a first transmission power for a first transmission using a first transmission power control parameter. The example apparatus 802/802' may also include means for transmitting the first transmission using the first transmission power. The example apparatus 802/802' may also include means for determining a second transmission power for a re-transmission using a second transmission power control parameter. The example apparatus 802/802' may also include means for transmitting the re-transmission using the second transmission power. In some configurations, the example apparatus 802/802' may include means for receiving a configured power offset for the re-transmission, where the second transmission power for the re-transmission is determined based on the configured power offset. In some configurations, the example apparatus 802/802' may include means for determining a third transmission power for another first transmission following the re-transmission, where the third transmission power comprises an accumulated transmission power and is determined without accumulation based on the configured power offset. In some configurations, the example apparatus 802/802' may include means for receiving a first configured target transmit power for the first transmission, where the first transmission power for the first transmission is determined based on the first configured target transmit power. The example apparatus 802/802' may also include means for receiving a second configured target transmit power for the re-transmission, where the second transmission power for the re-transmission is determined based on the second configured target transmit power. In some configurations, the example apparatus 802/802' may include means for reconfiguring at least one of a first configured target transmit power and a second configured target transmit power via a Radio Resource Configuration (RRC) message or Medium Access Control - Control Element (MAC-CE) signaling. In some configurations, the example apparatus 802/802' may include means for receiving a separate power control command for the first transmission and the re-transmission. In some configurations, the example apparatus 802/802' may include means for determining a third transmission power for another first transmission following the re-transmission, wherein the third transmission power comprises an accumulated transmission power and is determined without accumulation of a transmission power command for the re-transmission.

The aforementioned means may be one or more of the aforementioned components of the apparatus 802 and/or the processing system 914 of the apparatus 802' configured to perform the functions recited by the aforementioned means. As described *supra,* the processing system 914 may include the TX Processor 368, the RX Processor 356, and the controller/processor 359. As such, in one configuration, the aforementioned means may be the TX Processor 368, the RX Processor 356, and the controller/processor 359 configured to perform the functions recited by the aforementioned means.

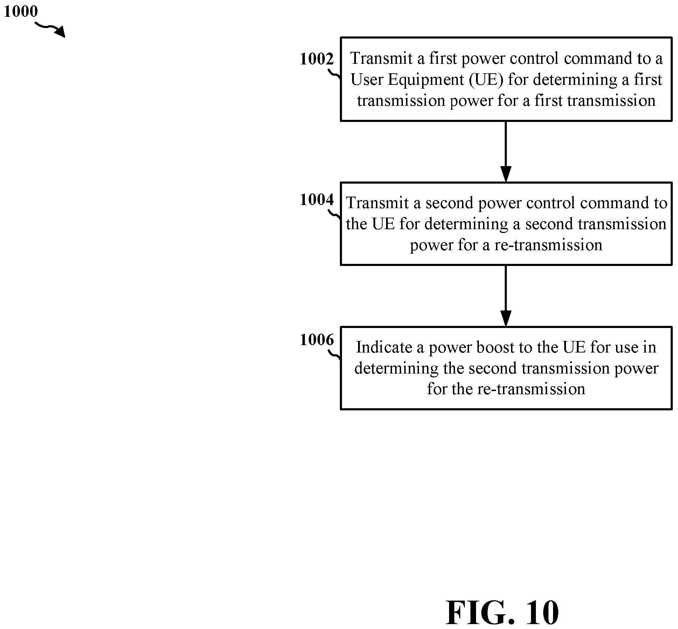

FIG. 10 is a flowchart 1000 of a method of wireless communication. The method may be performed by a base station (e.g., the base station 102, the base station 180, the base station 310, the base station 604, the base station 850, and/or the apparatus 1102/1102'). Optional aspects are illustrated with a dashed line. The method provides for improved power control that uniquely meets the needs of different types of transmissions on a same channel.

At 1002, the base station 102 transmits a first power control command to a UE for determining a first transmission power for a first transmission, as described at the first times (T1) of FIGs. 4 and 5. For example, a first transmission power control component 1106 of apparatus 1102 may be configured to facilitate the determining of a first power control command and a transmission component 1110 of the apparatus 1102 may be configured to facilitate the transmitting of the first power control command. In some examples, the base station may determine and transmit the first power control command based on a transmission power received from the UE. In some examples, the first power control command may include power boost configuration information. In some examples, the first power control command may include a configured target transmit power. In some examples, the first power control command may include settings for transmission power control parameters, such as whether a transmission power control accumulation parameter is enabled or disabled, and/or whether a power boost parameter is enabled or disabled.

At 1004, the base station transmits a second power control command to the UE for determining a second transmission power for a re-transmission, as described at the third times (T3) of FIGs. 4 and 5. For example, a second power control component 808 of the apparatus 802 may be configured to facilitate determining the second power control command and the transmission component 1110 may be configured to facilitate the transmitting of the second power control command. In some examples, the base station may determine and transmit the second power control command based on a transmission power received from the UE. In some examples, the base station may determine and transmit the second power control command separate from the determining and transmitting of the first power control command.

At 1006, the base station indicates a power boost to the UE for use in determining the second transmission power for the re-transmission, as described at 601 of FIG. 6. For example, a power boost determination component 1112 of the apparatus 1102 may be configured to facilitate the indicating of the power boost to the UE. In some examples, the power boost may comprise a configurable power boost. In some examples, the base station may indicate the power boost by transmitting the power boost in DCI to the UE. In some examples, the base station may indicates the power boost by transmitting the power boost in an RRC message to the UE.

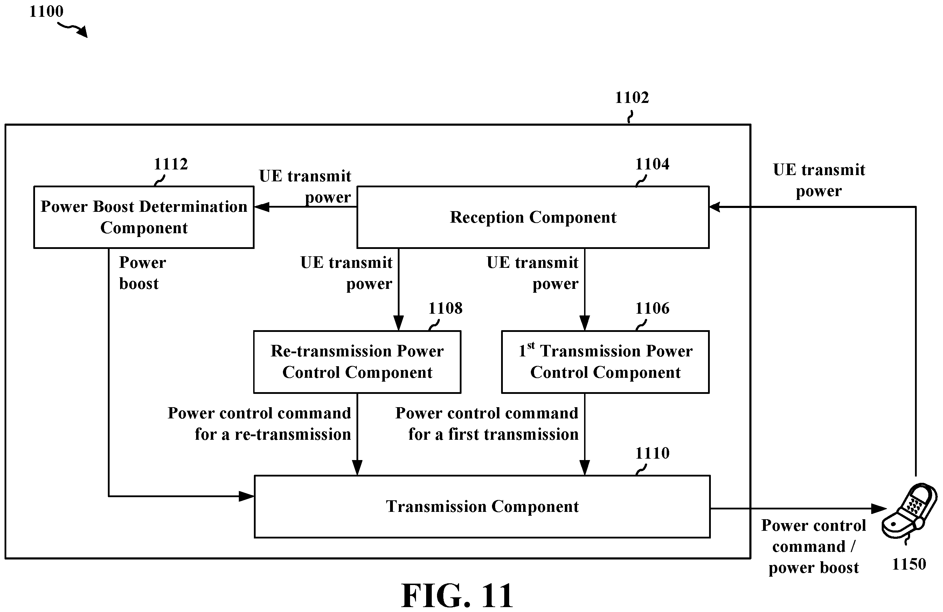

FIG. 11 is a conceptual data flow diagram 1100 illustrating the data flow between different means/components in an example apparatus 1102. The apparatus may be a base station, such as the base station 102/180, the base station 310, the base station 604, the base station 850, and/or the apparatus 1102/1102'. The apparatus 1102 includes a reception component 1104, a first transmission power control component 1106, a re-transmission power control component 1108, a transmission component 1110, and a power boost determination component 1112. In this example, the apparatus 1102 is in communication with a UE 1150.

The reception component 1104 is configured to receive uplink communications from the UE 1150. In some aspects, the received uplink communications include a UE transmit power associated with the received uplink communications.

The first transmission power control component 1106 may be configured to determine a first power control command for the UE 1150 for determining a first transmission power for a first transmission (e.g., as described in connection with, for example, 1002 of FIG. 10). In some examples, the first transmission power control component 1106 may be configured to determine the first power control command based on, for example, the UE transmit power, an estimated path loss, a UE-specific offset, a power offset term to account for different modulation and/or coding, etc. for the first transmission based on an accumulated transmission power and the power control command.

The re-transmission power control component 1108 may be configured to determine a second power control command for the UE 1150 for determining a second transmission power for a re-transmission (e.g., as described in connection with, for example, 1004 of FIG. 10). In some examples, the re-transmission power control component 1108 may be configured to determine the second power control command based on, for example, the UE transmit power, an estimated path loss, a UE-specific offset, a power offset term to account for different modulation and/or coding, etc. for the re-transmission based on an accumulated transmission power and the power control command.

The transmission component 1110 may be configured to transmit downlink communications to the UE 1150 (e.g., as described in connection with, for example, 1002 and 1004 of FIG. 10). In some examples, the transmitted downlink communication may comprise a power control command to adjust a subsequent first transmission transmit by the UE 1150. In some examples, the transmitted downlink communication may comprise a power control command to adjust a re-transmission to be communicated by the UE 1150.

The power boost determination component 1112 may be configured to indicate a power boost to the UE 1150 for use in determining the second transmission power for the re-transmission (e.g., as described in connection with, for example, 1006 of FIG. 10). In some examples, the power boost may comprise a configurable power boost. In some examples, the power boost may comprise an absolute transmission power adjustment. In some examples, the power boost determination component 1112 may be configured to determine the power boost based on, for example, the UE transmit power, an estimated path loss, a UE-specific offset, a power offset term to account for different modulation and/or coding, etc. for the re-transmission based on an accumulated transmission power and the power control command.

In some examples, the power boost determination component 1112 may be configured to indicate the power boost by transmitting the power boost in DCI to the UE 1150. In some examples, the power boost determination component 1112 may be configured to indicate the power boost by transmitting the power boost in an RRC message to the UE 1150.

The apparatus may include additional components that perform each of the blocks of the algorithm in the aforementioned flowcharts of FIG. 10. As such, each block in the aforementioned flowcharts of FIG. 10 may be performed by a component and the apparatus may include one or more of those components. The components may be one or more hardware components specifically configured to carry out the stated processes/algorithm, implemented by a processor configured to perform the stated processes/algorithm, stored within a computer-readable medium for implementation by a processor, or some combination thereof.

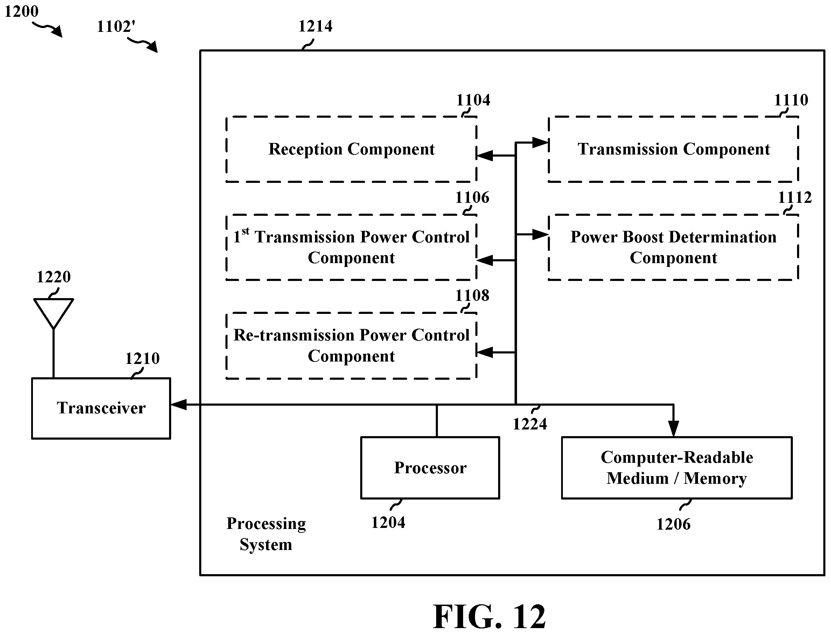

FIG. 12 is a diagram 1200 illustrating an example of a hardware implementation for an apparatus 1102' employing a processing system 1214. The processing system 1214 may be implemented with a bus architecture, represented generally by the bus 1224. The bus 1224 may include any number of interconnecting buses and bridges depending on the specific application of the processing system 1214 and the overall design constraints. The bus 1224 links together various circuits including one or more processors and/or hardware components, represented by the processor 1204, the components 1104, 1106, 1108, 1110, 1112, and the computer-readable medium / memory 1206. The bus 1224 may also link various other circuits such as timing sources, peripherals, voltage regulators, and power management circuits, which are well known in the art, and therefore, will not be described any further.

The processing system 1214 may be coupled to a transceiver 1210. The transceiver 1210 is coupled to one or more antennas 1220. The transceiver 1210 provides a means for communicating with various other apparatus over a transmission medium. The transceiver 1210 receives a signal from the one or more antennas 1220, extracts information from the received signal, and provides the extracted information to the processing system 1214, specifically the reception component 1104. In addition, the transceiver 1210 receives information from the processing system 1214, specifically the transmission component 1110, and based on the received information, generates a signal to be applied to the one or more antennas 1220. The processing system 1214 includes a processor 1204 coupled to a computer-readable medium / memory 1206. The processor 1204 is responsible for general processing, including the execution of software stored on the computer-readable medium / memory 1206. The software, when executed by the processor 1204, causes the processing system 1214 to perform the various functions described *supra* for any particular apparatus. The computer-readable medium / memory 1206 may also be used for storing data that is manipulated by the processor 1204 when executing software. The processing system 1214 further includes at least one of the components 1104, 1106, 1108, 1110, 1112. The components may be software components running in the processor 1204, resident/stored in the computer readable medium / memory 1206, one or more hardware components coupled to the processor 1204, or some combination thereof. The processing system 1214 may be a component of the base station 310 and may include the memory 376 and/or at least one of the TX processor 316, the RX processor 370, and the controller/processor 375. Alternatively, the processing system 1214 may be the entire base station (e.g., see the base station 310 of FIG. 3).

In one configuration, the apparatus 1102/1102' for wireless communication includes means for transmitting a first power control command to a UE for determining a first transmission power for a first transmission. The example apparatus 1102/1102' also includes means for transmitting a second power control command to the UE for determining a second transmission power for a re-transmission. The example apparatus 1102/1102' also includes means for indicating a power offset to the UE for use in determining the second transmission power for the re-transmission. In some configurations, the example apparatus 1102/1102' also includes means for transmitting a third power control command to the UE for determining a third transmission power for another first transmission following the re-transmission, and where the third power control command is determined without accumulation based on the power offset for the re-transmission. In some configurations, the example apparatus 1102/1102' also includes means for transmitting a power offset in DCI to the UE. In some configurations, the example apparatus 1102/1102' also includes means for transmitting a power offset in an RRC message to the UE. In some configurations the example apparatus 1102/1102' also includes means for transmitting a first configured target transmit power to the UE for determining the first transmission power for the first transmission. Additionally, the example apparatus 1102/1102' also includes means for transmitting a second configured target transmit power to the UE for determining the second transmission power for the re-transmission. In some configurations, the example apparatus 1102/1102' also includes means for transmitting the first configured target transmit power and the second configured target transmit power to the UE in an RRC message. In some configurations, the example apparatus 1102/1102' also includes means for transmitting at least one of a first reconfigured target transmit power and a second reconfigured target transmit power to the UE via an RRC message or Medium Access Control - Control Element (MAC-CE) signaling.

The aforementioned means may be one or more of the aforementioned components of the apparatus 1102 and/or the processing system 1214 of the apparatus 1102' configured to perform the functions recited by the aforementioned means. As described *supra,* the processing system 1214 may include the TX Processor 316, the RX Processor 370, and the controller/processor 375. As such, in one configuration, the aforementioned means may be the TX Processor 316, the RX Processor 370, and the controller/processor 375 configured to perform the functions recited by the aforementioned means.

It is understood that the specific order or hierarchy of blocks in the processes / flowcharts disclosed is an illustration of example approaches. Based upon design preferences, it is understood that the specific order or hierarchy of blocks in the processes / flowcharts may be rearranged. Further, some blocks may be combined or omitted. The accompanying method claims present elements of the various blocks in a sample order, and are not meant to be limited to the specific order or hierarchy presented.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." The word "exemplary" is used herein to mean "serving as an example, instance, or illustration." Any aspect described herein as "exemplary" is not necessarily to be construed as preferred or advantageous over other aspects. Unless specifically stated otherwise, the term "some" refers to one or more. Combinations such as "at least one of A, B, or C," "one or more of A, B, or C," "at least one of A, B, and C," "one or more of A, B, and C," and "A, B, C, or any combination thereof" include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof" may be A only, B only, C only, A and B, A and C, B and C, or A and B and C, where any such combinations may contain one or more member or members of A, B, or C. The words "module," "mechanism," "element," "device," and the like may not be a substitute for the word "means." As such, no claim element is to be construed as a means plus function unless the element is expressly recited using the phrase "means for."

## Claims

1. A method of wireless communication at a User Equipment, UE, comprising:
determining (702) a first transmission power for a first transmission using a first transmission power control parameter, wherein the first transmission power control parameter comprises a first closed loop power control mode for the first transmission using transmission power accumulation based on a previous transmission power;
transmitting (704) the first transmission using the first transmission power;
receiving (705) a configured power offset for a re-transmission, the power offset including a power boost, in Downlink Control Information, DCI, from a base station;
determining (706) a second transmission power for the re-transmission using a second transmission power control parameter, wherein the second transmission power is determined based on the configured power offset including the power boost, and wherein the second transmission power control parameter comprises a second closed loop power control mode for the re-transmission without the transmission power accumulation;
transmitting (708) the re-transmission using the second transmission power; and
determining a third transmission power for another first transmission following the re-transmission, wherein the third transmission power comprises an accumulated transmission power and is determined without accumulation of a transmission power command for the re-transmission.

2. The method of claim 1, further comprising:
receiving a first configured target transmit power for the first transmission, wherein the first transmission power for the first transmission is determined based on the first configured target transmit power; and
receiving a second configured target transmit power for the re-transmission, wherein the second transmission power for the re-transmission is determined based on the second configured target transmit power.

3. The method of claim 2, wherein the first configured target transmit power and the second configured target transmit power are received in a Radio Resource Configuration, RRC, message from a base station.

4. User Equipment, UE, comprising:
means for determining (806) a first transmission power for a first transmission using a first transmission power control parameter, wherein the first transmission power control parameter comprises a first closed loop power control mode for the first transmission using transmission power accumulation based on a previous transmission power;
means for transmitting (810) the first transmission using the first transmission power;
means for receiving (804) a configured power offset for a re-transmission, the power offset including a power boost, in Downlink Control Information, DCI, from a base station;
means for determining (808) a second transmission power for the re-transmission using a second transmission power control parameter, wherein the second transmission power is determined based on the configured power offset including the power boost, and wherein the second transmission power control parameter comprises a second closed loop power control mode for the re-transmission without the transmission power accumulation;
means for transmitting (810) the re-transmission using the second transmission power; and
means for determining a third transmission power for another first transmission following the re-transmission, wherein the third transmission power comprises an accumulated transmission power and is determined without accumulation of a transmission power command for the re-transmission.

5. The UE of claim 4, further comprising means configured for performing a method according to any of claims 1 to 3.

6. A method of wireless communication at a base station, comprising:
transmitting (1002) a first power control command to a User Equipment, UE, for determining a first transmission power for a first transmission;
receiving the first transmission;
transmitting (1004) a second power control command to the UE for determining a second transmission power for a re-transmission;
indicating (1006) a power offset including a power boost to the UE for use in determining the second transmission power for the re-transmission, wherein the power offset is transmitted in Downlink Control Information, DCI, to the UE;
receiving the re-transmission; and
transmitting a third power control command to the UE for determining a third transmission power for another first transmission following the re-transmission, and wherein the third power control command is determined without accumulation based on the power offset for the re-transmission.

7. The method of claim 6, further comprising:
transmitting a first configured target transmit power to the UE for determining the first transmission power for the first transmission; and
transmitting a second configured target transmit power to the UE for determining the second transmission power for the re-transmission.

8. The method of claim 7, further comprising transmitting the first configured target transmit power and the second configured target transmit power to the UE in a Radio Resource Configuration, RRC, message.

9. The method of claim 7, further comprising transmitting at least one of a first reconfigured target transmit power and a second reconfigured target transmit power to the UE via a Radio Resource Configuration, RRC, message or Medium Access Control - Control Element, MAC-CE, signaling.

10. Base station, comprising:
means for transmitting (1110) a first power control command to a User Equipment, UE, for determining a first transmission power for a first transmission;
means for receiving (1104) the first transmission;
means for transmitting (1110) a second power control command to the UE for determining a second transmission power for a re-transmission;
means for indicating (1112) a power offset including a power boost to the UE for use in determining the second transmission power for the re-transmission, wherein the power offset is transmitted in Downlink Control Information, DCI, to the UE;
means for receiving (1104) the re-transmission; and
means for transmitting a third power control command to the UE for determining a third transmission power for another first transmission following the re-transmission, and wherein the third power control command is determined without accumulation based on the power offset for the re-transmission.

11. The base station of claim 10, further comprising means configured for performing a method according to any of claims 6 to 9.

12. A computer-program comprising instructions for performing a method according to any of the claims 1 to 3 when executed by a processor of a UE.

13. A computer-program comprising instructions for performing a method according to any of the claims 6 to 9 when executed by a processor of a base station.

## Patentansprüche

1. Verfahren zur drahtlosen Kommunikation an einem Benutzergerät, UE, umfassend:
Bestimmen (702) einer ersten Übertragungsleistung für eine erste Übertragung unter Verwendung eines ersten Übertragungsleistungssteuerparameters, wobei der erste Übertragungsleistungssteuerparameter einen ersten Leistungssteuermodus mit geschlossener Schleife für die erste Übertragung unter Verwendung von Übertragungsleistungsakkumulation basierend auf einer vorherigen Übertragungsleistung umfasst;
Übertragen (704) der ersten Übertragung unter Verwendung der ersten Übertragungsleistung;
Empfangen (705) eines konfigurierten Leistungsversatzes für eine erneute Übertragung, wobei der Leistungsversatz eine Leistungserhöhung beinhaltet, in Downlink-Steuerinformation, DCI, von einer Basisstation;
Bestimmen (706) einer zweiten Übertragungsleistung für die erneute Übertragung unter Verwendung eines zweiten Übertragungsleistungssteuerparameters, wobei die zweite Übertragungsleistung basierend auf dem konfigurierten Leistungsversatz einschließlich der Leistungserhöhung bestimmt wird, und wobei der zweite Übertragungsleistungssteuerparameter einen zweiten Leistungssteuermodus mit geschlossener Schleife für die erneute Übertragung ohne die Übertragungsleistungsakkumulation umfasst;
Übertragen (708) der erneuten Übertragung unter Verwendung der zweiten Übertragungsleistung; und
Bestimmen einer dritten Übertragungsleistung für eine weitere erste Übertragung nach der erneuten Übertragung, wobei die dritte Übertragungsleistung eine akkumulierte Übertragungsleistung umfasst und ohne Akkumulation eines Übertragungsleistungsbefehls für die erneute Übertragung bestimmt wird.

2. Verfahren nach Anspruch 1, ferner umfassend:
Empfangen einer ersten konfigurierten Zielsendeleistung für die erste Übertragung, wobei die erste Übertragungsleistung für die erste Übertragung basierend auf der ersten konfigurierten Zielsendeleistung bestimmt wird; und
Empfangen einer zweiten konfigurierten Zielsendeleistung für die erneute Übertragung, wobei die zweite Übertragungsleistung für die erneute Übertragung basierend auf der zweiten konfigurierten Zielsendeleistung bestimmt wird.

3. Verfahren nach Anspruch 2, wobei die erste konfigurierte Zielsendeleistung und die zweite konfigurierte Zielsendeleistung in einer Funkressourcenkonfigurations-, RRC-, Nachricht von einer Basisstation empfangen werden.

4. Benutzergerät, UE, umfassend:
Mittel zum Bestimmen (806) einer ersten Übertragungsleistung für eine erste Übertragung unter Verwendung eines ersten Übertragungsleistungssteuerparameters, wobei der erste Übertragungsleistungssteuerparameter einen ersten Leistungssteuermodus mit geschlossener Schleife für die erste Übertragung unter Verwendung von Übertragungsleistungsakkumulation basierend auf einer vorherigen Übertragungsleistung umfasst;
Mittel zum Übertragen (810) der ersten Übertragung unter Verwendung der ersten Übertragungsleistung;
Mittel zum Empfangen (804) eines konfigurierten Leistungsversatzes für eine erneute Übertragung, wobei der Leistungsversatz eine Leistungserhöhung beinhaltet, in Downlink-Steuerinformation, DCI, von einer Basisstation;
Mittel zum Bestimmen (808) einer zweiten Übertragungsleistung für die erneute Übertragung unter Verwendung eines zweiten Übertragungsleistungssteuerparameters, wobei die zweite Übertragungsleistung basierend auf dem konfigurierten Leistungsversatz einschließlich der Leistungserhöhung bestimmt wird, und wobei der zweite Übertragungsleistungssteuerparameter einen zweiten Leistungssteuermodus mit geschlossener Schleife für die erneute Übertragung ohne die Übertragungsleistungsakkumulation umfasst;
Mittel zum Übertragen (810) der erneuten Übertragung unter Verwendung der zweiten Übertragungsleistung; und
Mittel zum Bestimmen einer dritten Übertragungsleistung für eine weitere erste Übertragung nach der erneuten Übertragung, wobei die dritte Übertragungsleistung eine akkumulierte Übertragungsleistung umfasst und ohne Akkumulation eines Übertragungsleistungsbefehls für die erneute Übertragung bestimmt wird.

5. UE nach Anspruch 4, ferner umfassend Mittel, die zum Durchführen eines Verfahrens nach einem der Ansprüche 1 bis 3 konfiguriert sind.

6. Verfahren zur drahtlosen Kommunikation an einer Basisstation, umfassend:
Übertragen (1002) eines ersten Leistungssteuerbefehls an ein Benutzergerät, UE, zum Bestimmen einer ersten Übertragungsleistung für eine erste Übertragung;
Empfangen der ersten Übertragung;
Übertragen (1004) eines zweiten Leistungssteuerbefehls an das UE zum Bestimmen einer zweiten Übertragungsleistung für eine erneute Übertragung;
Anzeigen (1006) eines Leistungsversatzes einschließlich einer Leistungserhöhung an das UE zur Verwendung beim Bestimmen der zweiten Übertragungsleistung für die erneute Übertragung, wobei der Leistungsversatz in Downlink-Steuerinformation, DCI, an das UE übertragen wird;
Empfangen der erneuten Übertragung; und
Übertragen eines dritten Leistungssteuerbefehls an das UE zum Bestimmen einer dritten Übertragungsleistung für eine weitere erste Übertragung nach der erneuten Übertragung, und wobei der dritte Leistungssteuerbefehl ohne Akkumulation basierend auf dem Leistungsversatz für die erneute Übertragung bestimmt wird.

7. Verfahren nach Anspruch 6, ferner umfassend:
Übertragen einer ersten konfigurierten Zielsendeleistung an das UE zum Bestimmen der ersten Übertragungsleistung für die erste Übertragung; und
Übertragen einer zweiten konfigurierten Zielsendeleistung an das UE zum Bestimmen der zweiten Übertragungsleistung für die erneute Übertragung.

8. Verfahren nach Anspruch 7, ferner umfassend Übertragen der ersten konfigurierten Zielsendeleistung und der zweiten konfigurierten Zielsendeleistung an das UE in einer Funkressourcenkonfigurations-, RRC-, Nachricht.

9. Verfahren nach Anspruch 7, ferner umfassend Übertragen von mindestens einer von einer ersten rekonfigurierten Zielsendeleistung und einer zweiten rekonfigurierten Zielsendeleistung an das UE über eine Funkressourcenkonfigurations-, RRC-, Nachricht oder Mediumzugriffssteuerung-Steuerelement-, MAC-CE-, Signalisierung.

10. Basisstation, umfassend:
Mittel zum Übertragen (1110) eines ersten Leistungssteuerbefehls an ein Benutzergerät, UE, zum Bestimmen einer ersten Übertragungsleistung für eine erste Übertragung;
Mittel zum Empfangen (1104) der ersten Übertragung;
Mittel zum Übertragen (1110) eines zweiten Leistungssteuerbefehls an das UE zum Bestimmen einer zweiten Übertragungsleistung für eine erneute Übertragung;
Mittel zum Anzeigen (1112) eines Leistungsversatzes einschließlich einer Leistungserhöhung an das UE zur Verwendung beim Bestimmen der zweiten Übertragungsleistung für die erneute Übertragung, wobei der Leistungsversatz in Downlink-Steuerinformation, DCI, an das UE übertragen wird;
Mittel zum Empfangen (1104) der erneuten Übertragung; und
Mittel zum Übertragen eines dritten Leistungssteuerbefehls an das UE zum Bestimmen einer dritten Übertragungsleistung für eine weitere erste Übertragung nach der erneuten Übertragung, und wobei der dritte Leistungssteuerbefehl ohne Akkumulation basierend auf dem Leistungsversatz für die erneute Übertragung bestimmt wird.

11. Basisstation nach Anspruch 10, ferner umfassend Mittel, die zum Durchführen eines Verfahrens nach einem der Ansprüche 6 bis 9 konfiguriert sind.

12. Computerprogramm, umfassend Anweisungen zum Durchführen eines Verfahrens nach einem der Ansprüche 1 bis 3, wenn es von einem Prozessor eines UE ausgeführt wird.

13. Computerprogramm, umfassend Anweisungen zum Durchführen eines Verfahrens nach einem der Ansprüche 6 bis 9, wenn es von einem Prozessor einer Basisstation ausgeführt wird.

## Revendications

1. Un procédé de communication sans fil au niveau d'un équipement utilisateur, UE, comprenant :
la détermination (702) d'une première puissance d'émission pour une première transmission en utilisant un premier paramètre de contrôle de puissance d'émission, dans lequel le premier paramètre de contrôle de puissance d'émission comprend un premier mode de contrôle de puissance en boucle fermée pour la première transmission en utilisant un cumul de puissance d'émission basé sur une puissance d'émission précédente ;
la transmission (704) de la première transmission en utilisant la première puissance d'émission ;
la réception (705) d'un décalage de puissance configuré pour une retransmission, le décalage de puissance comportant une augmentation de puissance, dans une information de contrôle de liaison descendante, DCI, à partir d'une station de base ;
la détermination (706) d'une deuxième puissance d'émission pour la retransmission en utilisant un second paramètre de contrôle de puissance d'émission, dans lequel la deuxième puissance d'émission est déterminée sur la base du décalage de puissance configuré comportant l'augmentation de puissance, et dans lequel le second paramètre de contrôle de puissance d'émission comprend un second mode de contrôle de puissance en boucle fermée pour la retransmission sans le cumul de puissance d'émission ;
la transmission (708) de la retransmission en utilisant la deuxième puissance d'émission ; et
la détermination d'une troisième puissance d'émission pour une autre première transmission suivant la retransmission, dans lequel la troisième puissance d'émission comprend une puissance d'émission cumulée et est déterminée sans cumul d'une commande de puissance d'émission pour la retransmission.

2. Le procédé selon la revendication 1, comprenant en outre :
la réception d'une première puissance d'émission cible configurée pour la première transmission, dans lequel la première puissance d'émission pour la première transmission est déterminée sur la base de la première puissance d'émission cible configurée ; et
la réception d'une seconde puissance d'émission cible configurée pour la retransmission, dans lequel la deuxième puissance d'émission pour la retransmission est déterminée sur la base de la seconde puissance d'émission cible configurée.

3. Le procédé selon la revendication 2, dans lequel la première puissance d'émission de cible configurée et la seconde puissance d'émission de cible configurée sont reçues dans un message de configuration de ressource radio, RRC, à partir d'une station de base.

4. Un équipement utilisateur, UE, comprenant :
un moyen pour déterminer (806) une première puissance d'émission pour une première transmission en utilisant un premier paramètre de contrôle de puissance d'émission, dans lequel le premier paramètre de contrôle de puissance d'émission comprend un premier mode de contrôle de puissance en boucle fermée pour la première transmission en utilisant un cumul de puissance d'émission basé sur une puissance d'émission précédente ;
un moyen pour transmettre (810) la première transmission en utilisant la première puissance d'émission ;
un moyen pour recevoir (804) un décalage de puissance configuré pour une retransmission, le décalage de puissance comportant une augmentation de puissance, dans une information de contrôle de liaison descendante, DCI, à partir d'une station de base ;
un moyen pour déterminer (808) une deuxième puissance d'émission pour la retransmission en utilisant un second paramètre de contrôle de puissance d'émission, dans lequel la deuxième puissance d'émission est déterminée sur la base du décalage de puissance configuré comportant l'augmentation de puissance, et dans lequel le second paramètre de contrôle de puissance d'émission comprend un second mode de contrôle de puissance en boucle fermée pour la re-transmission sans cumul de puissance d'émission ;
un moyen pour transmettre (810) la retransmission en utilisant la deuxième puissance d'émission ; et
un moyen pour déterminer une troisième puissance d'émission pour une autre première transmission suivant la retransmission, dans lequel la troisième puissance d'émission comprend une puissance d'émission cumulée et est déterminée sans cumul d'une commande de puissance d'émission pour la retransmission.

5. L'UE selon la revendication 4, comprenant en outre des moyens configurés pour réaliser un procédé selon l'une des revendications 1 à 3.

6. Un procédé de communication sans fil au niveau d'une station de base, comprenant :
la transmission (1002) d'une première commande de contrôle de puissance à un équipement utilisateur, UE, pour déterminer une première puissance d'émission pour une première transmission ;
la réception de la première transmission ;
la transmission (1004) d'une deuxième commande de contrôle de puissance à l'UE pour déterminer une deuxième puissance d'émission pour une retransmission ;
l'indication (1006) d'un décalage de puissance comportant une augmentation de puissance à l'UE pour une utilisation dans la détermination de la deuxième puissance d'émission pour la re-transmission, dans lequel le décalage de puissance est transmis dans une information de contrôle de liaison descendante, DCI, à l'UE ;
la réception de la retransmission ; et
la transmission d'une troisième commande de contrôle de puissance à l'UE pour déterminer une troisième puissance d'émission pour une autre première transmission suivant la retransmission, et dans lequel la troisième commande de contrôle de puissance est déterminée sans cumul sur la base du décalage de puissance pour la retransmission.

7. Le procédé selon la revendication 6, comprenant en outre :
la transmission d'une première puissance d'émission cible configurée à l'UE pour déterminer la première puissance d'émission pour la première transmission ; et
la transmission d'une seconde puissance d'émission cible configurée à l'UE pour déterminer la deuxième puissance d'émission pour la retransmission.

8. Le procédé selon la revendication 7, comprenant en outre la transmission de la première puissance d'émission de cible configurée et de la deuxième puissance d'émission de cible configurée à l'UE dans un message de configuration de ressource radio, RRC.

9. Le procédé selon la revendication 7, comprenant en outre la transmission d'au moins l'une d'une première puissance d'émission de cible reconfigurée et d'une seconde puissance d'émission de cible reconfigurée à l'UE via un message de configuration de ressource radio, RRC, ou une signalisation d'élément de contrôle de contrôle d'accès de support, MAC-CE.

10. Une station de base, comprenant :
un moyen pour transmettre (1110) une première commande de contrôle de puissance à un équipement utilisateur, UE, pour déterminer une première puissance d'émission pour une première transmission ;
un moyen pour recevoir (1104) la première transmission ;
un moyen pour transmettre (1110) une deuxième commande de contrôle de puissance à l'UE pour déterminer une deuxième puissance d'émission pour une retransmission ;
un moyen pour indiquer (1112) un décalage de puissance comportant une augmentation de puissance à l'UE pour une utilisation dans la détermination de la deuxième puissance d'émission pour la retransmission, dans laquelle le décalage de puissance est transmis dans une information de contrôle de liaison descendante, DCI, à l'UE ;
un moyen pour recevoir (1104) la retransmission ; et
un moyen pour transmettre une troisième commande de contrôle de puissance à l'UE pour déterminer une troisième puissance d'émission pour une autre première transmission suivant la retransmission, et dans laquelle la troisième commande de contrôle de puissance est déterminée sans cumul sur la base du décalage de puissance pour la retransmission.

11. La station de base selon la revendication 10, comprenant en outre des moyens configurés pour réaliser un procédé selon l'une des revendications 6 à 9.

12. Un programme de calculateur comprenant des instructions pour réaliser un procédé selon l'une des revendications 1 à 3, lorsqu'il est exécuté par un processeur d'un UE.

13. Un programme de calculateur comprenant des instructions pour réaliser un procédé selon l'une des revendications 6 à 9, lorsqu'il est exécuté par un processeur d'une station de base.
